# EUROPEAN PATENT APPLICATION

(11) **EP 4 006 679 A1**
(43) Date of publication of application: **01.06.2022**
(21) Application number: 21209468.4
(22) Date of filing: 22.11.2021
(51) Int. Cl.: G05D 1/00, G05D 1/02, H04W 4/029, H04W 4/48, H04W 4/02

(54) **WATERCRAFT ALIGNMENT SYSTEMS, AND ASSOCIATED METHODS**

(30) Priority: 30.11.2020 US 202017106288
(71) Applicant: Navico Holding AS, 4370 Egersund (NO)
(72) Inventor: Neumann, Karl Thomas, Marina del Rey, 90292 (US); Schroeder, Jeremy J, Sapulpa, 74066 (US)
(74) Representative: Hewett, Jonathan Michael Richard

(57) **Abstract**

Artificial intelligence can be used to provide accurate realignment functionality for various different marine devices on a watercraft. A system is provided for aligning one or more marine devices, where one or more controllers are configured to receive marine data from the marine device and receive secondary data from one or more second devices. An expected alignment characteristic is determined based on the secondary data and a corresponding deviation therefrom is determined based on marine data. In response to determining the deviation, the controllers are configured to cause at least one of a notification indicating a misalignment of the marine device to be provided to a user, a data adjustment to marine data so as to produce recalibrated marine data, or a physical adjustment to be applied to the marine device so as to subsequently receive realigned marine data from the marine device.

## Description

### FIELD OF THE INVENTION

Embodiments of the present invention relate generally to identifying alignment issues for one or more marine devices on a watercraft and, more particularly, to utilizing artificial intelligence to reliably identify such alignment issues.

### BACKGROUND OF THE INVENTION

Various marine devices may be used in the operation of a watercraft. These marine devices may include a primary motor, a trolling motor, a global positioning system (GPS), a radar, a sonar transducer assembly, an electronic compass, a gyroscope, etc. These marine devices may have issues with their alignment so that the data produced by the marine devices is inaccurate. Alignment issues may arise from various circumstances, such as from improper installation, a collision or a physical impact of an object with the watercraft or marine devices on the watercraft, a broken mount, and wear of parts over time, among many other reasons. These inaccuracies may give the operator of the watercraft faulty information, and the inaccuracy of the data may cause the operator to make decisions based on the data that the operator would not have otherwise made.

Misalignment of the marine devices and inaccuracy of the data produced by marine devices can be very difficult to identify by an operator even when the operator has all of the necessary data at his or her disposal. This difficulty is only increased when the operator is focused on other tasks on the watercraft. Furthermore, alignment issues may arise at any time, and an operator may not have the time to frequently monitor the marine devices for such alignment issues. On longer navigational trips, the operator may need time to sleep, and the alignment issues could increase significantly during the time period that the operator is away. For example, because water currents may vary significantly in two nearby positions, small errors in position may lead to cause significant deviations from a predicted path. As another example, where an angler is relying upon sonar returns to catch fish, minor inaccuracies in the positioning provided in sonar returns can result in a significant reduction in the probability that an angler will be able to catch one or more fish identified in sonar returns.

Additionally, spoofing of marine data has become more widespread in recent years, particularly for GPS data. GPS spoofing may be caused by pirate operations, military operations, and due to other operations. As with other misalignment issues, spoofing can be difficult to detect. Even where another party is not intentionally manipulating the data from marine devices, the marine devices may naturally become more inaccurate over time or due to collisions or other environmental factors. For example, a compass may be misaligned when a magnetic material is placed nearby, and data generated by the compass may be inaccurate as a result.

### BRIEF SUMMARY OF THE INVENTION

Given the above, there is need for alignment systems with improved functionality and methods for improving the functionality of marine devices while still providing a reasonable cost to the user (e.g., an angler).

Example embodiments of the present invention provide an alignment system and methods for improving the functionality of marine devices. The system may receive marine data from one or more of the marine devices and determine an expected alignment characteristic for the marine devices based on other data. The system may determine the deviation between the actual marine data and the expected alignment characteristic for one or more marine devices. Where this deviation is significant, the system may take some action in response, such as providing a notification to the user, automatically correcting the data to account for the deviation, automatically realigning the marine device based on the deviation, and/or providing a recommended corrective action.

Some embodiments may identify sudden or gradual changes in the alignment of marine devices associated with a watercraft and notify the operator or perform one or more corrective actions without requiring intervention from the operator. Some embodiments may constantly monitor data for marine devices and other devices to detect any issues with misalignment or inaccurate data. These embodiments may monitor the alignment and/or accuracy of data provided from marine devices more frequently, and the embodiments may beneficially free the operator to perform other tasks. By correcting the alignment and/or the accuracy of marine devices, the operator may be equipped to make better decisions and have greater assurance that the watercraft and associated marine devices will operate as desired.

The system may beneficially use artificial intelligence to assist in determining the expected alignment characteristic for the marine devices. One or more controllers may refine a model for the expected alignment characteristic using known historical comparisons between the expected alignment characteristic data and other data. The system may revise an initial hypothesized model, or the system may develop a new model based on provided data. The system may evaluate data and manipulate the weight to be provided for each type of input data to improve the accuracy of the model. Once the model is sufficiently refined so that the model may predict the expected alignment characteristic with a desired degree of accuracy, the model may be employed to determine an expected alignment characteristic in normal operation. This system may beneficially develop the expected alignment characteristic by accounting for several different types of data, and the developed model may assign different weights to different types of data. In some systems, even after the model is deployed, the system may beneficially improve the developed model by analyzing further data points. By utilizing artificial intelligence, a novice user may benefit from the experience of the models utilized - making marine activities more user friendly and accessible/successful for beginners. Embodiments beneficially allow for the alignment and automatic correction of an autopilot, a radar, a direction sensor, a compass, a heading sensor, a position sensor, a primary or trolling motor, a sonar transducer assembly, a rudder, and other marine devices associated with a watercraft.

In an example embodiment, a system for providing alignment functionality for one or more marine devices on a watercraft is provided. The system comprises one or more marine devices associated with the watercraft, where the one or more marine devices comprise at least one of a radar, a sonar transducer, a primary motor, a trolling motor, an autopilot, a rudder, a position sensor, or a direction sensor. The system comprises at least one controller, and the controller(s) are configured to (a) receive marine data from the one or more marine devices, (b) receive secondary data associated with one or more second devices, where the one or more second devices is different from the one or more marine devices that provided the marine data, (c) determine an expected alignment characteristic for the one or more marine devices based on the secondary data, and (d) determine a deviation from the expected alignment characteristic based on the marine data, where the deviation is greater than a threshold deviation. The controller(s) are configured to cause, in response to determining the deviation, at least one of a notification indicating a misalignment of the one or more marine devices to be provided to a user, a data adjustment to the marine data so as to produce recalibrated marine data, or a physical adjustment to be applied to the one or more marine devices so as to subsequently receive realigned marine data from the one or more marine devices.

In some embodiments, the at least one controller is configured to utilize a model to determine the expected alignment characteristic for the one or more marine devices, and the model is formed based on historical comparisons of the secondary data and the marine data. The model may be refined through machine learning utilizing artificial intelligence based on the historical comparisons of the secondary data and the marine data and known deviations of the marine data for the historical comparisons. The model may be subsequently refined utilizing the marine data, the secondary data, and the determined deviation.

In some embodiments, the one or more marine devices comprises at least one of the radar or the direction sensor. The direction sensor comprises a compass or a heading sensor. Additionally, the at least one controller is further configured to (a) determine a first angular position of a point of interest from the marine data, where the point of interest is a fixed landmark, (b) determine the expected alignment characteristic by determining a second angular position of the point of interest using the secondary data, and (c) determine the deviation based on an angular offset between the first angular position of the point of interest and a second angular position of the point of interest.

In some embodiments, the one or more marine devices comprises the position sensor. Additionally, the at least one controller is further configured to (a) determine a first position of a point of interest from the marine data, wherein the point of interest is a fixed landmark, (b) determine the expected alignment characteristic by determining an expected position of the point of interest using the secondary data, and (c) determine the deviation based on a difference between the first position of the point of interest and the expected position of the point of interest.

In some embodiments, the one or more marine devices comprises the autopilot. The at least one controller is further configured to (a) determine a first position of the watercraft, (b) determine the expected alignment characteristic by determining a second position of the watercraft using the secondary data, and (c) determine the deviation based on a difference between the first position and the second position.

In some embodiments, the one or more marine devices comprises the trolling motor or the primary motor. The at least one controller is further configured to determine a first direction of the trolling motor or the primary motor from the marine data at a current time. The at least one controller is also configured to determine the expected alignment characteristic of the trolling motor or the primary motor using the secondary data. The secondary data comprises one or more past locations of the watercraft and a current location of the watercraft. The at least one controller determines a predicted path from the one or more past locations and the current location during which the trolling motor or the primary motor was active, and the at least one controller determines the expected alignment characteristics by determining a second direction that is expected for the trolling motor or the primary motor at the current time. The second direction aligns with a line colinear or tangential to the predicted path at the current time. Additionally, the at least one controller is configured to determine the deviation based on an angular offset between the first direction and the second direction.

In some embodiments, the one or more marine devices comprises the sonar transducer. The at least one controller is further configured to (a) receive sonar data that was created by the sonar transducer, wherein the sonar data is related to a first area, (b) analyze the sonar data to identify an object in the first area, (c) determine a first position of the object, (d) determine the expected alignment characteristics by determining a second position of the object using secondary data, where the secondary data comprises historical sonar data, and (e) determine the deviation based on a difference between the first position of the object and the second position of the object.

In some embodiments, the one or more marine devices comprises the rudder. The at least one controller is further configured to determine a first direction of the rudder from the marine data at a current time. The at least one controller is also configured to determine the expected alignment characteristic of the rudder using the secondary data. The secondary data comprises one or more past locations of the watercraft and a current location of the watercraft. The at least one controller determines a predicted path from the one or more past locations and the current location, and the at least one controller determines the expected alignment characteristics by determining a second direction that is expected for the rudder at the current time. The second direction aligns with a line colinear or tangential to the predicted path at the current time. The at least one controller is further configured to determine the deviation based on an angular offset between the first direction and the second direction.

In some embodiments, the one or more second devices comprise at least one of a radar, a sonar transducer, a global positioning system, a compass, a heading sensor, a trolling motor, an autopilot, position sensor, a direction sensor, a GPS sensor, an AIS transceiver, a temperature sensor, a camera, or a memory comprising previous navigational data. The at least one controller may be configured to repetitively determine any deviation from the expected alignment characteristic based on the marine data.

In another example embodiment, a marine electronic device of a watercraft is provided. The marine electronic device comprises a communication interface, a memory, and at least one controller. The communications interface is configured to receive one or more signals from one or more marine devices associated with the watercraft. The one or more marine devices comprise at least one of a radar, a sonar transducer, a primary motor, a trolling motor, an autopilot, a rudder, a position sensor, or a direction sensor. The at least one controller is configured to receive marine data from the one or more marine devices and to receive secondary data associated with one or more second devices. The one or more second devices is different from the one or more marine devices that provided the marine data. The at least one controller is also configured to determine an expected alignment characteristic for the one or more marine devices based on the secondary data and is configured to determine a deviation from the expected alignment characteristic based on the marine data. This deviation is greater than a threshold deviation. The at least one controller is also configured to cause, in response to determining the deviation, at least one of (a) a notification indicating a misalignment of the one or more marine devices to be provided to a user, (b) a data adjustment to the marine data so as to produce recalibrated marine data, or (c) a physical adjustment to be applied to the one or more marine devices so as to subsequently receive realigned marine data from the one or more marine devices.

In some embodiments, the at least one controller is configured to utilize a model to determine the expected alignment characteristic for the one or more marine devices. The model is formed based on historical comparisons of the secondary data and the marine data. The model may be refined through machine learning utilizing artificial intelligence based on the historical comparisons of the secondary data and the marine data and known deviations of the marine data for the historical comparisons. The model may be subsequently refined utilizing the marine data, the secondary data, and the determined deviation.

In some embodiments, the one or more marine devices comprises at least one of the radar or the direction sensor, and the direction sensor comprises a compass or a heading sensor. The at least one controller is further configured to determine a first angular position of a point of interest from the marine data, wherein the point of interest is a fixed landmark. The at least one controller is configured to determine the expected alignment characteristic by determining a second angular position of the point of interest using the secondary data and is also configured to determine the deviation based on an angular offset between the first angular position of the point of interest and a second angular position of the point of interest.

In some embodiments, the one or more marine devices comprises the position sensor. The at least one controller is further configured to determine a first position of a point of interest from the marine data, with the point of interest being a fixed landmark. The at least one controller is configured to determine the expected alignment characteristic by determining an expected position of the point of interest using the secondary data, and the at least one controller is also configured to determine the deviation based on a difference between the first position of the point of interest and the expected position of the point of interest.

In some embodiments, the one or more marine devices comprises the autopilot. The at least one controller is further configured to determine a first position of the watercraft and to determine the expected alignment characteristic by determining a second position of the watercraft using the secondary data. The at least one controller is also configured to determine the deviation based on a difference between the first position and the second position.

In some embodiments, the one or more marine devices comprises the trolling motor or the primary motor. The at least one controller is further configured to determine a first angular position of the trolling motor or primary motor from the marine data. The at least one controller is also configured to determine the expected alignment characteristic of the trolling motor or primary motor using the secondary data, and this secondary data comprises one or more past locations of the watercraft and a most recent location of the watercraft. The at least one controller determines a predicted path from the one or more past locations and the most recent location, and the at least one controller determines the expected alignment characteristics by determining the angle of a line colinear or tangential to the predicted path at a specified time. The at least one controller is also configured to determine the deviation based on an angular offset between the first angular position and the expected alignment characteristic of the point of interest.

In some embodiments, the one or more marine devices comprises the sonar transducer. The at least one controller is further configured to receive sonar data that was created by the sonar transducer, and this sonar data is related to a first area. The at least one controller is also configured to analyze the sonar data to identify an object in the first area, to determine a first position of the object, and to determine the expected alignment characteristics by determining a second position of the object using secondary data. This secondary data comprises historical sonar data. The at least one controller is also configured to determine the deviation based on a difference between the first position of the object and the second position of the object.

In some embodiments, the at least one controller is configured to continuously apply the data adjustment to subsequently received marine data so as to produce the recalibrated marine data. In some embodiments, the at least one controller is further configured to determine a second expected alignment characteristic for the one or more marine devices based on the secondary data and to determine a second deviation from the expected alignment characteristic based on the recalibrated marine data. This second deviation is greater than the threshold deviation. The at least one controller is further configured to cause, in response to determining the second deviation, occurrence of a recalibration event.

In yet another example embodiment, a non-transitory computer readable medium is provided having stored thereon software instructions that, when executed by at least one controller, cause the at least one controller to execute various operations. These operations include receiving marine data from one or more marine devices associated with a watercraft and also receiving secondary data from one or more second devices. The one or more second devices is different from the one or more marine devices that provided the marine data. The operations also comprise determining an expected alignment characteristic for the one or more marine devices based on the secondary data and determining a deviation from the expected alignment characteristic based on the marine data. This deviation is greater than a threshold deviation. Additionally, the operations include causing, in response to determining the deviation, at least one of (a) a notification indicating a misalignment of the one or more marine devices to be provided to a user, (b) a data adjustment to the marine data so as to produce recalibrated marine data, or (c) a physical adjustment to be applied to the one or more marine devices so as to subsequently receive realigned marine data from the one or more marine devices.

In some embodiments, the non-transitory computer readable medium causes the at least one controller to utilize a model to determine the expected alignment characteristic for the one or more marine devices. The model is formed based on historical comparisons of the secondary data and the marine data.

While alphabetical labels have been provided to list certain operations above, these alphanumeric labels are presented only to provide further clarity in the text above. These labels are not intended to limit the scope of the embodiments herein, and they are not intended to indicate that operations must be performed in a specific order.

### BRIEF DESCRIPTION OF THE DRAWINGS

Having thus described the invention in general terms, reference will now be made to the accompanying drawings, which are not necessarily drawn to scale, and wherein:
FIG. 1 illustrates an example watercraft including various marine devices, in accordance with some embodiments discussed herein;
FIG. 2A is a flowchart of an example method of machine learning, in accordance with some embodiments discussed herein;
FIG. 2B is a flowchart of an example method for the use of artificial intelligence, in accordance with some embodiments discussed herein;
FIG. 3A illustrates a schematic view showing an example image presented on a display with radar return data and a first angular position of a point of interest (POI), in accordance with some embodiments discussed herein;
FIG. 3B illustrates a schematic view showing an example image presented on a display with radar return data and a second angular position of the POI illustrated in FIG. 3A, in accordance with some embodiments discussed herein;
FIG. 3C illustrates a schematic view showing an example image presented on a display with radar return data and the deviation between the first and second angular positions of the POI illustrated, in accordance with some embodiments discussed herein;
FIG. 3D illustrates a schematic view showing another example image presented on a display with radar return data, wherein the radar return data is overlaid on a chart, in accordance with some embodiments discussed herein;
FIG. 4 illustrates a schematic view showing an example array of sonar transducer elements, in accordance with some embodiments discussed herein;
FIG. 5A illustrates a schematic view showing an example sonar beam generated by a sonar transducer, in accordance with some embodiments discussed herein;
FIG. 5B illustrates a schematic view showing an area scanned by the sonar transducer with a first position of an object being shown, in accordance with some embodiments discussed herein;
FIG. 5C illustrates a schematic view showing the area scanned by the sonar transducer with a second position of the object being shown, in accordance with some embodiments discussed herein;
FIG. 5D illustrates a schematic view illustrating the misalignment of the sonar transducer, in accordance with some embodiments discussed herein;
FIG. 6 illustrates a schematic view illustrating misalignment of a position sensor such as a GPS, in accordance with some embodiments discussed herein;
FIG. 7 illustrates a schematic view illustrating misalignment of a trolling motor, a primary motor, or a rudder, in accordance with some embodiments discussed herein;
FIG. 8 illustrates a schematic view illustrating misalignment of an autopilot, with the deviation between the first position and the second position being shown, in accordance with some embodiments discussed herein;
FIGS. 9A-9L illustrate various images that may be presented on a display and notifications that may be presented related to a misalignment, in accordance with some embodiments discussed herein;
FIG. 10 is a block diagram of an example system with various electronic devices, marine devices, and secondary devices shown, in accordance with some embodiments discussed herein;
FIG. 11 illustrates a flowchart of an example method for identifying and addressing a misalignment in a marine device, in accordance with some embodiments discussed herein;
FIG. 12 illustrates a flowchart of an example method for identifying and addressing a misalignment in a radar or a direction sensor, in accordance with some embodiments discussed herein;
FIG. 13 illustrates a flowchart of an example method for identifying and addressing a misalignment in a position sensor, in accordance with some embodiments discussed herein;
FIG. 14 illustrates a flowchart of an example method for identifying and addressing a misalignment in an autopilot, in accordance with some embodiments discussed herein;
FIG. 15 illustrates a flowchart of an example method for identifying and addressing a misalignment in a primary motor or a trolling motor, in accordance with some embodiments discussed herein;
FIG. 16 illustrates a flowchart of an example method for identifying and addressing a misalignment in a sonar transducer, in accordance with some embodiments discussed herein; and
FIG. 17 illustrates a flowchart of an example method for identifying and addressing a misalignment in a rudder, in accordance with some embodiments discussed herein.

### DETAILED DESCRIPTION

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. Like reference numerals refer to like elements throughout.

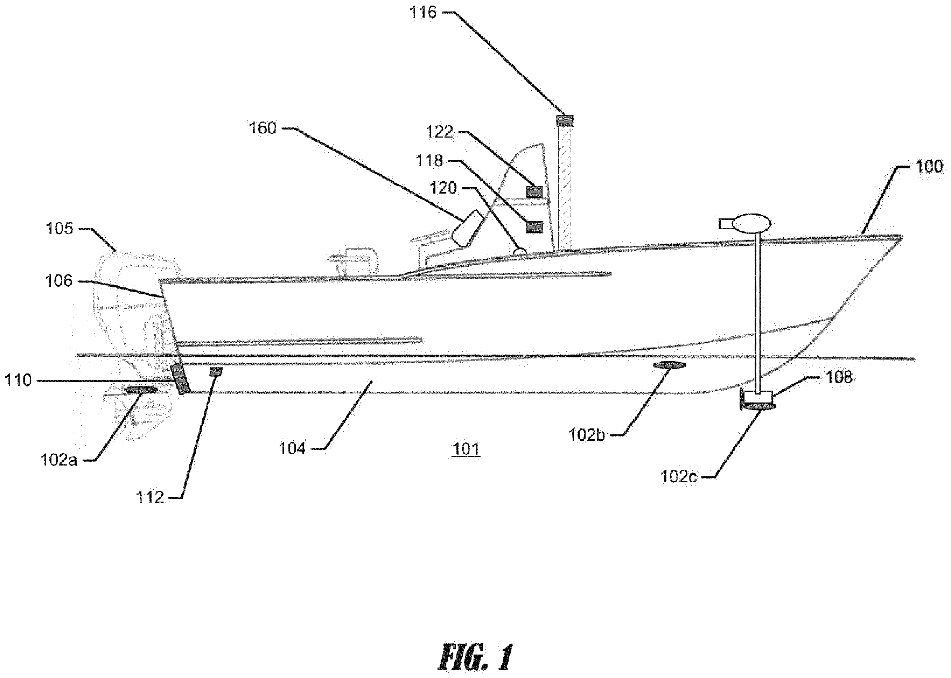

FIG. 1 illustrates an example watercraft 100 including various marine devices, in accordance with some embodiments discussed herein. As depicted in FIG. 1, the watercraft 100 (e.g., a vessel) is configured to traverse a marine environment, e.g. body of water 101, and may use one or more sonar transducer assemblies 102a, 102b, and 102c disposed on and/or proximate to the watercraft. The watercraft 100 may be a surface watercraft, a submersible watercraft, or any other implementation known to those skilled in the art. Transducer assemblies 102a, 102b, and 102c may also be provided. The transducer assemblies 102a, 102b, and 102c may each include one or more transducer elements (such as in the form of the example arrays described herein) configured to transmit sound waves into a body of water, receive sonar returns from the body of water, and convert the sonar returns into sonar return data.

Depending on the configuration, the watercraft 100 may include a primary motor 105, which may be a main propulsion motor such as an outboard or inboard motor. Additionally, the watercraft 100 may include a trolling motor 108 configured to propel the watercraft 100 or maintain a position. The one or more transducer assemblies (e.g., 102a, 102b, and/or 102c) may be mounted in various positions and to various portions of the watercraft 100 and/or equipment associated with the watercraft 100. For example, the transducer assembly may be mounted to the transom 106 of the watercraft 100, such as depicted by transducer assembly 102a. The transducer assembly may be mounted to the bottom or side of the hull 104 of the watercraft 100, such as depicted by transducer assembly 102b. The transducer assembly may be mounted to the trolling motor 108, such as depicted by transducer assembly 102c.

The watercraft 100 may also include one or more marine electronic devices 160, such as may be utilized by a user to interact with, view, or otherwise control various aspects of the various sonar systems described herein. In the illustrated embodiment, the marine electronic device 160 is positioned proximate the helm (e.g., steering wheel) of the watercraft 100 - although other places on the watercraft 100 are contemplated. Likewise, additionally or alternatively, a user's mobile device may include functionality of a marine electronic device.

The watercraft 100 may also comprise other components within the one or more marine electronic devices 160 or at the helm. In FIG. 1, the watercraft 100 comprises a radar 116, which is mounted at an elevated position (although other positions relative to the watercraft are also contemplated). The watercraft 100 also comprises an AIS transceiver 118, a direction sensor 120, and a camera 122, and these components are each positioned at or near the helm (although other positions relative to the watercraft are also contemplated). Additionally, the watercraft 100 comprises a rudder 110 at the stern of the watercraft 100, and the rudder 110 may be positioned on the watercraft 100 so that the rudder 110 will rest in the body of water 101. In other embodiments, these components may be integrated into the one or more electronic devices 160 or other devices. Another example device on the watercraft 100 includes a temperature sensor 112 that may be positioned so that it will rest within or outside of the body of water 101. Other example devices include a wind sensor, one or more speakers, and various vessel devices/features (e.g., doors, bilge pump, fuel tank, etc.), among other things. Additionally, one or more sensors may be associated with marine devices; for example, a sensor may be provided to detect the position of the primary motor 105, the trolling motor 108, or the rudder 110.

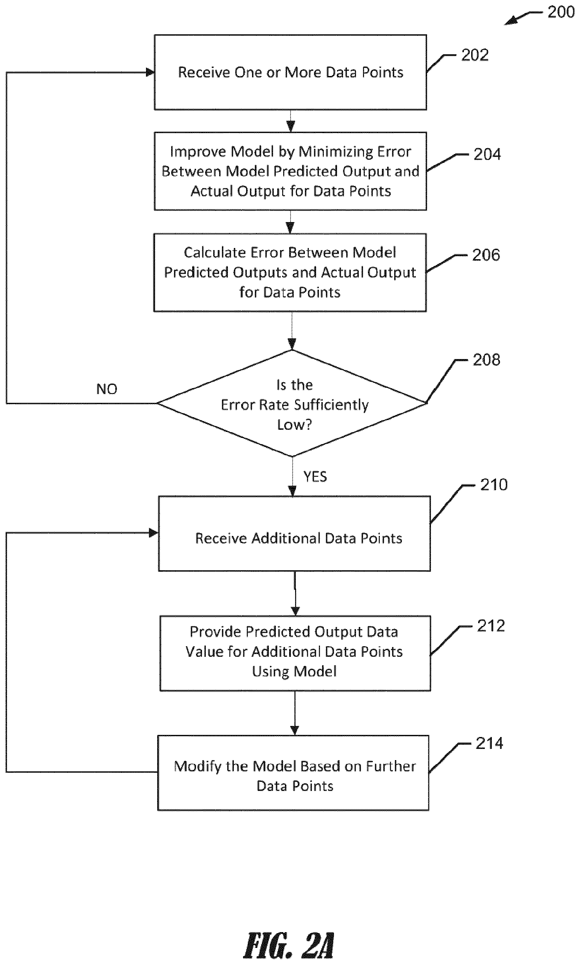

FIG. 2A is a flowchart of an example method 200 of machine learning, such as may be utilized with artificial intelligence for various embodiments of the present invention. At least one controller or another suitable device may be configured to develop a model for the calculation of an expected alignment characteristic such as described herein in various embodiments. In this regard, the developed model may be deployed and utilized to determine potential misalignment of one or more marine devices.

This system may beneficially develop the expected alignment characteristic by accounting for several different types of data, and the developed model may assign different weights to different types of data. In some systems, even after the model is deployed, the systems may beneficially improve the developed model by analyzing further data points. By utilizing artificial intelligence, a novice user may benefit from the experience of the models utilized - making marine activities more user friendly and accessible/successful for beginners. Embodiments beneficially allow for the alignment and automatic correction of, for example, an autopilot, a radar, a direction sensor, a compass, a heading sensor, a position sensor, a primary or trolling motor, a sonar transducer assembly, a rudder, and other marine devices associated with a watercraft. However, the method 200 may allow for an expected alignment characteristic to be developed for other components on the watercraft as well and allow for automatic corrections, recommended corrective actions, notifications of misalignment, or other actions to be taken. By enabling the detection of misalignment or inaccuracy of data from marine devices, the method 200 may be used to improve the performance of marine devices, the watercraft itself, and other components on the watercraft. Utilization of the model may free the user to perform other tasks and enable performance and consideration of complex computations that the user could not otherwise solve on their own (e.g., the systems described herein may also be beneficial for even the most experienced users).

By receiving several different types of data, the example method 200 may be performed to generate complex models. The example method 200 may find relationships between different types of data that may not have been anticipated. By detecting unexpected relationships between different types of data, the method 200 may also generate accurate models even where a limited amount of data is available.

In some embodiments, the model may be continuously improved even after the model has been deployed. Thus, the model may be continuously refined based on changes in the systems or in the environment over time, which provides a benefit as compared with other models that stay the same after being deployed. The example method 200 may also refine the deployed model to fine-tune the weights that are provided to various types of data based on subtle changes in the watercraft and/or the environment. Where certain parts of the watercraft are replaced, modified, or damaged, the method 200 may continuously refine a deployed model to quickly account for the changes and provide a revised model that is accurate. By contrast, where a model is not continuously refined, changes to the watercraft or the surrounding environment may make the model inaccurate until a new model may be developed and implemented, and implementation of a new model may be very costly, time-consuming, and less accurate than a continuously refined model.

At operation 202, one or more data points are received. These data points may or may not be the initial data points being received. These data points will preferably comprise known data on a desired alignment characteristic that the model will be used to predict. The alignment characteristic may be selected for a specific characteristic such as a position, an angle, a distance, etc. related to a marine device, the watercraft, or a POI. For example, where the model is being generated to provide an expected alignment characteristic for the position of a watercraft, the data points provided at operation 202 will preferably comprise known data for the position of the watercraft. The data points provided at operation 202 will preferably be historical data points with verified values to ensure that the model generated will be accurate. The data points may take the form of discrete data points. For example, the data may provide the specific location of a POI in terms of latitude and longitude. However, where the data points are not known at a high confidence level, a calculated data value may be provided, and, in some cases, a standard deviation or uncertainty value may also be provided to assist in determining the weight to be provided to the data value in generating a model. In this regard, the model predicted alignment characteristic or the expected alignment characteristic may be formed based on historical comparisons of the secondary data and the marine data.

At operation 204, a model is improved by minimizing error between a predicted alignment characteristic generated by the model and an actual alignment characteristic for data points. In some embodiments, an initial model may be provided or selected by a user. The user may provide a hypothesis for an initial model, and the method 200 may improve the initial model. However, in other embodiments, the user may not provide an initial model, and the method 200 may develop the initial model at operation 204, such as during the first iteration of the method 200. The process of minimizing error may be similar to a linear regression analysis on a larger scale where three or more different variables are being analyzed, and various weights may be provided for the variables to develop a model with the highest accuracy possible. For example, where a certain variable has a high correlation with the actual alignment characteristic, that variable may be given increased weight in the model. In refining the model by minimizing the error between the predicted alignment characteristic generated by the model and the actual or known alignment characteristic, the component performing the method 200 may perform a very large number of complex computations. Sufficient refinement results in an accurate model being developed.

In some embodiments, the accuracy of the model may be checked. For example, at operation 206, the accuracy of the model is determined. This may be done by calculating the error between the model predicted alignment characteristic generated by the model and the actual alignment characteristic from the data points. In some embodiments, error may also be calculated before operation 204. By calculating the accuracy or the error, the method 200 may determine if the model needs to be refined further or if the model is ready to be deployed.

At operation 208, a determination is made as to whether the calculated error is sufficiently low. A specific threshold value may be provided in some embodiments. For example, where the alignment characteristic is an angle, the threshold may be 0.1 degrees, and the calculated error may be sufficiently low if the average error is less than or equal to 0.1 degrees. However, other threshold values may be used, and the threshold value may be altered by the user in some embodiments. If the error rate is not sufficiently low, then the method 200 may proceed back to operation 202 so that one or more additional data points may be received. If the error rate is sufficiently low, then the method 200 proceeds to operation 210. Once the error rate is sufficiently low, the training phase for developing the model may be completed, and the implementation phase may begin where the model may be used to predict the expected alignment characteristic.

By completing operations 202, 204, 206, and 208, a model may be refined through machine learning utilizing artificial intelligence based on the historical comparisons of secondary data and marine data and based on known deviations of the marine data for the historical comparisons. Notably, example model generation and/or refinement may be accomplished even if the order of these operations is changed, if some operations are removed, or if other operations are added.

During the implementation phase, the model may be utilized to provide an expected alignment characteristic for various marine devices and/or situations. An example implementation of a model is illustrated from operations 210-212. In some embodiments, the model may be modified (e.g., further refined) based on the received data points, such as at operation 214.

At operation 210, additional data points are received. For these additional data points, the alignment characteristic may not be known. At operation 212, the model may be used to provide a predicted output data value for the additional data points. Thus, the model may be utilized to determine the expected alignment characteristic for the one or more marine devices.

At operation 214, the model may be modified based on further data points, such as those received during operation 210 and/or other data points. For example, the model may be refined utilizing the marine data, secondary data, and the determined deviation, such as described herein. By providing further data points, the model can continuously be improved even after the model has been deployed. The further data points may be the additional data points received at operation 210, or the further data points may be provided to the controller from some other source. In some embodiments, the controller(s) or other component performing the method 200 may receive additional secondary data from secondary devices and verify additional data points received at operation 210 using this additional secondary data. By doing this, the method 200 may prevent errors in the additional data points from negatively impacting the accuracy of the model.

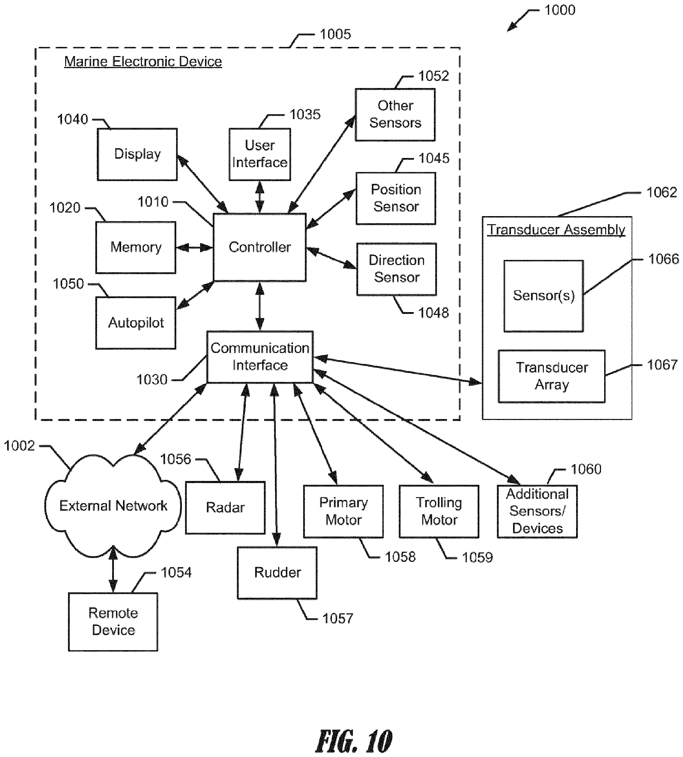

In some embodiments, further data points are provided to the controller from some other source and are utilized to improve the model. For example, further data points may be saved to a memory 1020 (FIG. 10) associated with at least one controller 1010 via communication interface 1030, or the further data points may be sent through the external network 1002 from a remote device 1054. These further data points may be verified before being provided to the at least one controller 1010 to improve the model, or the at least one controller 1010 may verify the further data points utilizing additional secondary data.

As indicated above, in some embodiments, operation 214 is not performed and the method proceeds from operation 212 back to operation 210. In other embodiments, operation 214 occurs before operation 212 or simultaneous with operation 212. Upon completion, the method 200 may return to operation 210 and proceed on to the subsequent operations.

The predicted output data values of the model may be compared to data being received from one or more marine devices when the watercraft is in operation. In this way, the model may be used to detect any issues within the marine devices and ensure that these devices are each functioning properly. In some situations, where predicted output data value varies from the actual data received from a particular marine device by a sufficient amount, a correction may be automatically made to the marine device or a prompt may be provided to a user to recommend a correction. The training phase performed at operations 202, 204, and 206 (and which may be continued at operations 210 and 214) may beneficially identify patterns or correlations in the data points, identifying where certain factors should be given an increased weight or a reduced weight.

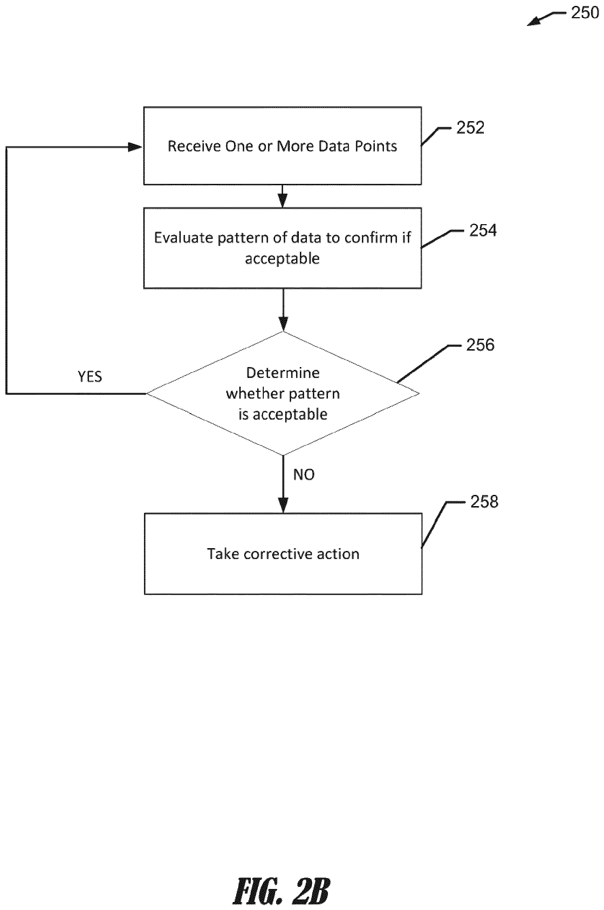

FIG. 2B is a flowchart of an example method for the use of artificial intelligence, in accordance with some embodiments discussed herein. At operation 252, one or more data points are received. Operation 252 may be similar to operation 202 of FIG. 2A. At operation 254, the data may be evaluated to identify patterns within the data, and this evaluation may also entail an assessment of the patterns. For example, various characteristics of the data or objects within the data may be tracked and compared within threshold ranges. Those various characteristics may have relative threshold ranges when correlated together - thereby forming example patterns. The patterns may be assessed to evaluate the strength of the recognized pattern, which may be provided in some cases in the form of a correlation coefficient. In some embodiments, an assessment may be made as to whether the newly received data points deviate significantly from the patterns.

At operation 256, a determination is made as to whether the pattern within the data is acceptable. This may involve a determination that a newly received data point deviates significantly from the recognized pattern. Alternatively, a determination may be made that only a weak correlation or no correlation can be found in the data. Other determinations may also be made. If the pattern is determined to be acceptable at operation 256, then the method 250 may proceed back to operation 252. If the pattern is not acceptable for some reason at operation 256, then the method may proceed to operation 258.

At operation 258, a corrective action is taken. This corrective action may simply be a notification to the user that the pattern is not acceptable. The notification may come in various forms, such as physically, visually, or audibly. For example, an audible notification may be provided through a speaker, a buzzer, or some other sound device. Alternatively, the notification may be presented on a display or via a signal light. A notification may be presented with detailed information about the pattern and an identified issue, or the notification may be presented upon detection of a general issue with the pattern so that the user may investigate the pattern and/or the data. The notification may be provided in several other alternative ways. In some embodiments, such as described herein, the corrective action may be a physical adjustment to a marine device, a data adjustment generated from a marine device or from another source, or some other action to troubleshoot issues with a marine device.

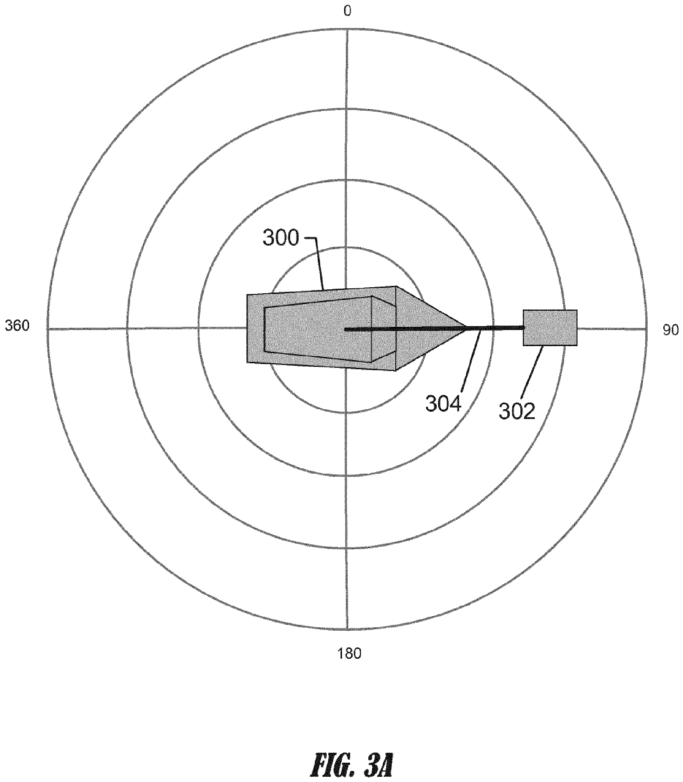

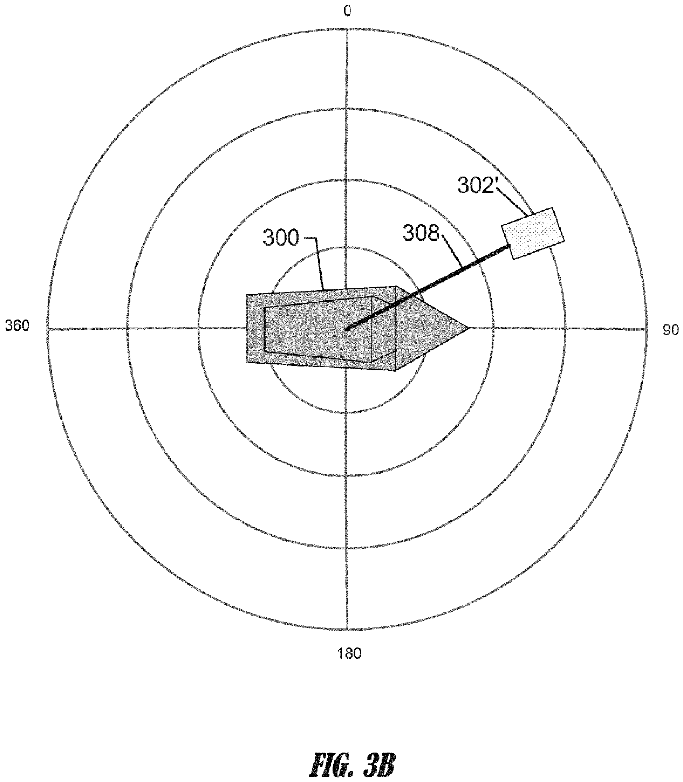

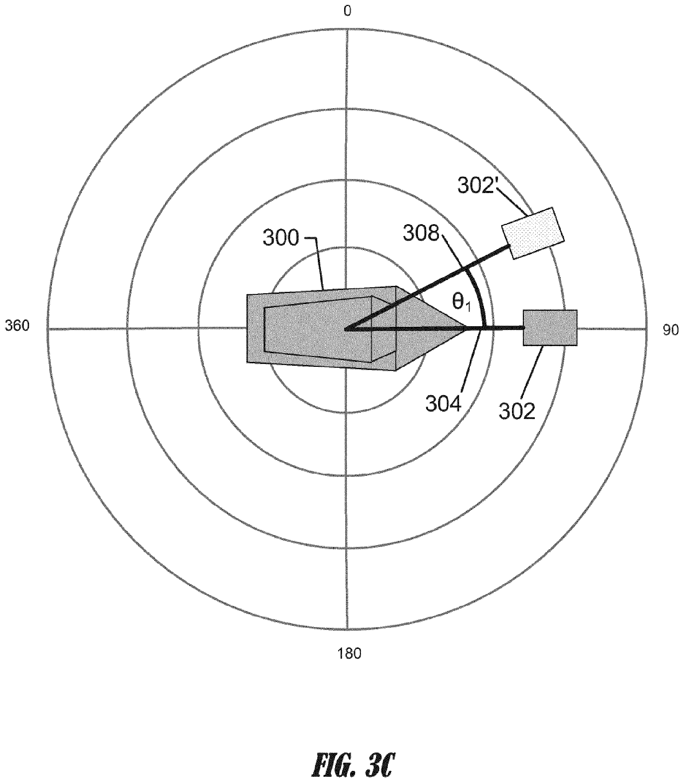

FIGs. 3A, 3B, and 3C illustrate an example image presented on a display showing radar return data, a first angular position 304 and a second angular position 308 of a POI 302, and the deviation θ₁ between the first and second angular positions. In FIG. 3A, the position of the watercraft 300 is illustrated on the display. In some embodiments, the watercraft 300 may possess a different size in the image presented on the display, and, in other embodiments, the image presented in the display may not show any indication for the watercraft 300, leaving it implied that the watercraft 300 is located at the middle of the image or at some other location. The image may comprise a grid pattern as shown with several circular rings to show the distance from the watercraft 300.

The watercraft 300 may comprise one or more marine devices and at least one controller, and one of the marine devices may be a radar. However, the at least one controller may not be positioned on the watercraft 300, or some operations could be performed by one or more on-board controllers while other operations are performed by one or more controllers that are not positioned on the watercraft 300. Although the following example is based on misalignment of a radar, similar approaches may be taken for determining misalignment of other marine devices, such as a heading sensor or direction sensor, among others.

Where a radar is provided, the at least one controller may be configured to perform steps to determine the deviation from an expected alignment characteristic for the radar as shown in FIGS 3A-3C, such as to determine if the radar is misaligned. Such an operation could be performed on-demand, periodically, and/or continuously (such as may be true for any example misalignment determination of other marine devices). As shown in FIG. 3A, the at least one controller may identify a POI 302, and the at least one controller may determine a first angular position 304 of the POI using the marine data. For example, this first angular position may be determined using radar data from a radar or data from a direction sensor, or data may be provided from a compass or a heading signal. However, other types of marine data may be used to determine the first angular position. In some embodiments, multiple marine devices may be used to determine the first angular position (e.g. a radar and a heading sensor), and the data provided by the multiple marine devices may be weighted or averaged to determine the first angular position. This data may be collected by the marine device(s) and sent in a signal to a controller, or the marine device(s) may determine the first angular position and send a signal with information about the first angular position to the controller.

The POI 302 may be a fixed landmark such as a buoy, a shoreline, a lighthouse, a dock, etc. The fixed landmark may move slightly in the short term, but stay in approximately the same position over time (e.g. a buoy). The angular positions such as the first angular position 304 may be defined relative to the forward direction of the watercraft 300 in some embodiments (although other directions are contemplated).

As shown in FIG. 3B, the at least one controller may determine the expected alignment characteristic by determining a second angular position 308 of the POI 302' using secondary data. This secondary data may comprise data from other sensors and sources than the marine device. For example, depending on the marine device being checked, the secondary data may include data from a radar, a compass, or a heading sensor. The secondary data may also include data from a navigation chart, a sonar transducer, a GPS, a sensor associated with a primary motor or a trolling motor, an autopilot, position sensor, a direction sensor, a GPS sensor, an AIS transceiver, a temperature sensor, a camera, or a memory comprising previous navigational data, but other secondary data may also be used. For example, an AIS transceiver, a sonar transducer, or another position sensor may identify a POI at a location. Using direction information that may be obtained from a compass or heading sensor, an angular position relative to the watercraft may be calculated from the determined location. Additionally, other information such as images from a camera or previous navigational data can be used to refine the second angular position or to confirm that the first angular position is correct. Then, as shown in FIG. 3C, the at least one controller may determine the deviation based on an angular offset between the first angular position 304 of the POI 302 and the second angular position 308 of the POI 302'.

While FIG. 3A, 3B, and 3C illustrate that the first angular position 304 and the second angular position 308 are both single positions, the at least one controller may, in some embodiments, be able to determine the angular position of multiple points on a single POI. By doing so, the at least one controller may better detect rotation of the POI, and the at least one controller may assess any misalignment with improved accuracy. The first angular position 304 and the second angular position 308 may be determined in a variety of ways, including by calculating the angular position of single point on the external surface of the POI, by calculating the angular position of an expected center point of the POI, etc. Similarly, multiple different POIs, such as within the received marine data, may be checked - which may be utilized to confirm/refine accuracy of the detected deviation.

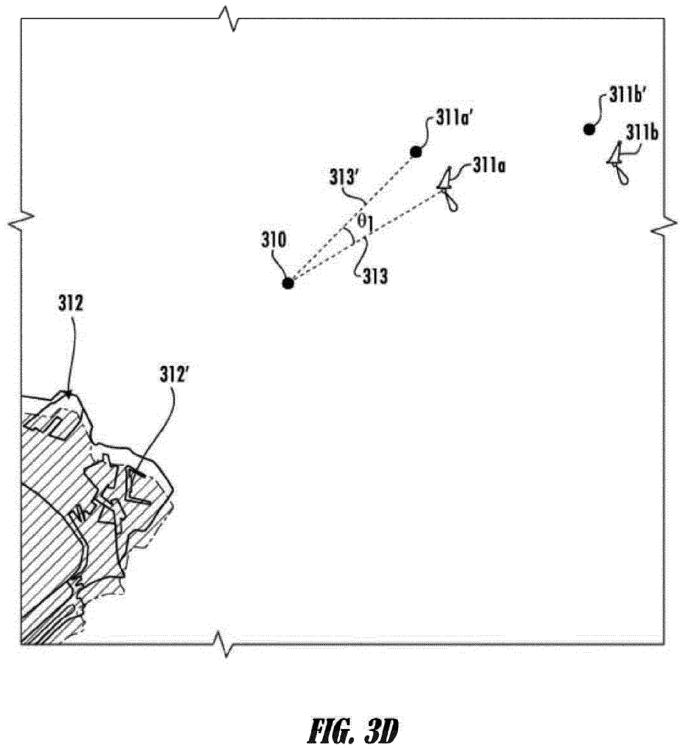

FIG. 3D illustrates another schematic view of an example image presented on a display showing radar return data and the deviation between the first and second positions of the POI, in accordance with some embodiments discussed herein. Notably, FIG. 3D illustrates example radar return data 311a', 311b', and 312' overlaid on a navigation chart (which illustrates corresponding POIs 311a, 311b, and 312). A watercraft 310 is also illustrated.

FIG. 3D illustrates misalignment of the first POI 312 (e.g., the shoreline), the second POI 311a, and a third POI 311b - such as may occur if the radar is misaligned. The first position 311a' of the second POI may be determined via radar data from the radar, while the expected second position 311a of the second POI (e.g., the expected alignment characteristic) may be the actual location of the second POI as indicated by a correlation between the position of the watercraft 310 and known navigation chart data. The second POI is a buoy in this example. By determining the first position 311a', a first direction 313' may be determined for the first position 311a' of the second POI relative to the watercraft 310. By determining the second position 311a, a second direction 313 of the second position 311a of the second POI relative to the watercraft 310 may also be determined. Using the first direction 313' and the second direction 313, the deviation θ₁ may be determined. In some embodiments, a similar process can be repeated or checked using the first POI 312 (and it's determined first position 312' via the radar data) and/or the third POI 311b (and it's determined first position 311b' via the radar data).

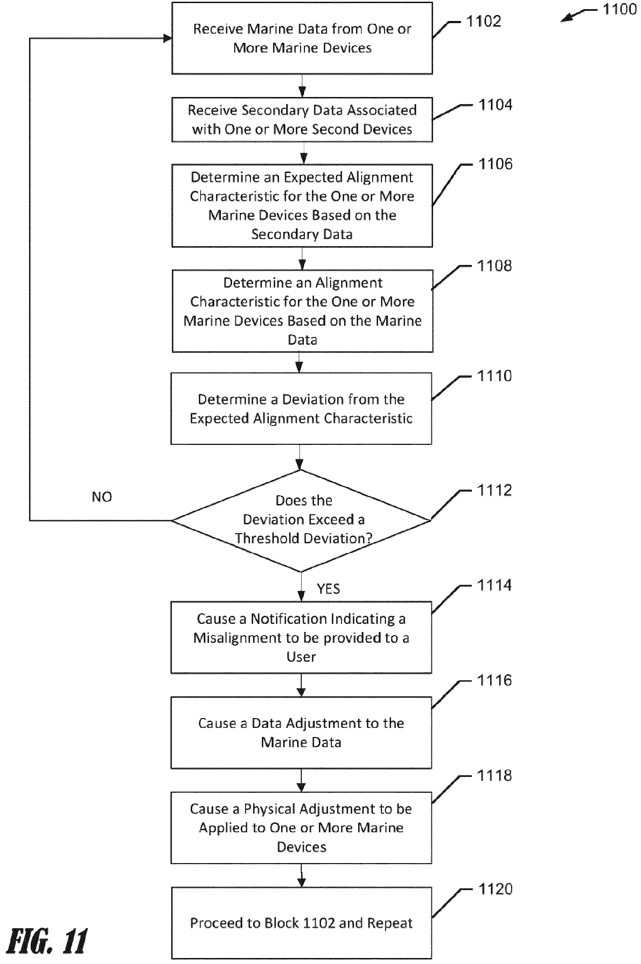

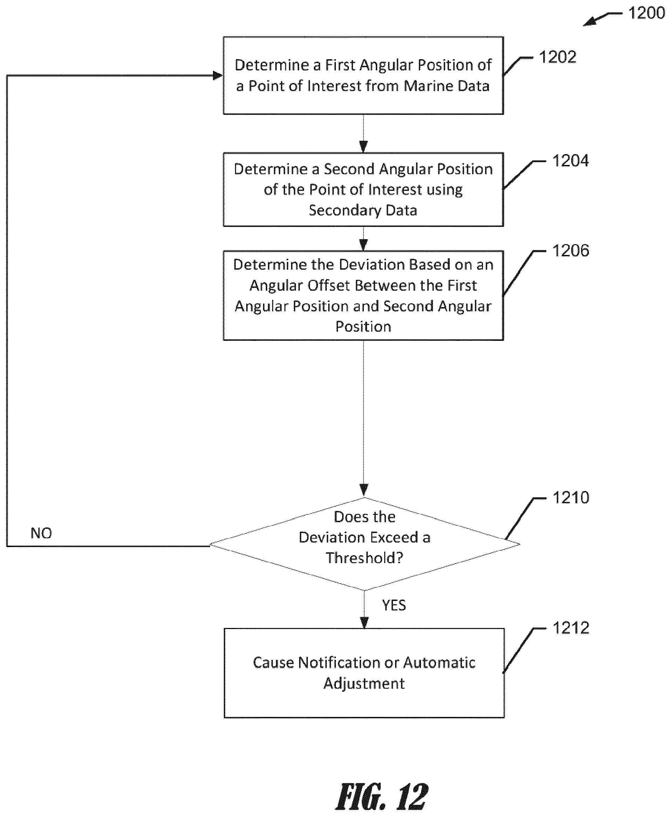

While FIGS. 3A through 3D and the accompanying text describe the identification and correction of angular misalignment, further detail on how the angular misalignment may be determined and addressed is presented in FIGS. 11 and 12 and the corresponding text.

Once the misalignment is determined, various misalignment procedures can be taken depending on the configuration of the system and/or the desires of the user (e.g., a notification can be sent, the incoming radar data can be recalibrated automatically, a physical realignment can be made, etc.). In some embodiments, a corresponding corrective action can be determined based on the determined deviation (such as using artificial intelligence) and provided to the user and/or applied. Further description regarding such features can be found herein.

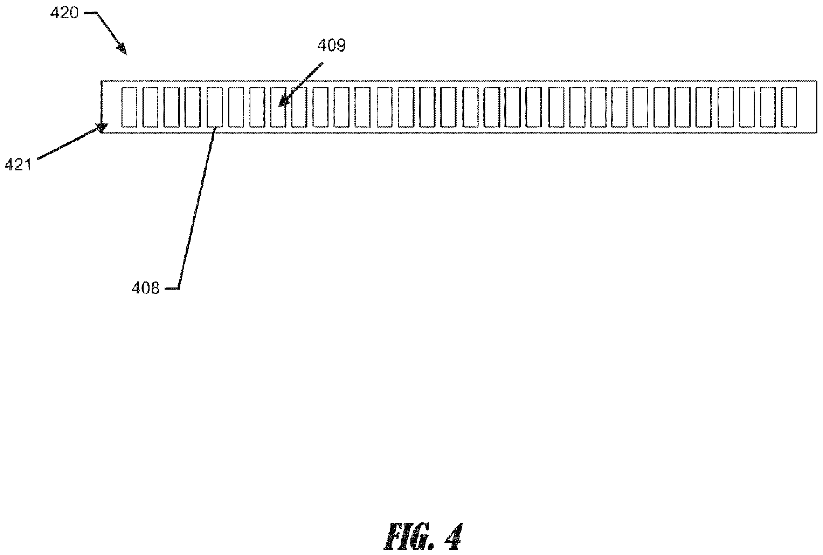

Another example marine device that may be misaligned is a sonar transducer. In some embodiments, the system may be configured to determine misalignment of one or more sonar transducers for the watercraft. FIG. 4 illustrates a schematic view showing an example array of sonar transducer elements, in accordance with some embodiments discussed herein. FIG. 4 illustrates an example array 420 of transducer elements 408 that may be utilized with various embodiments of the present invention, such as within an example transducer assembly described herein. In some embodiments, the transducer array 420 may include a plurality of transducer elements 408 arranged in a line and electrically connected relative to each other. For example, the transducer elements 408 may be individually positioned on a printed circuit board (PCB). The PCB may mechanically support and electrically connect the electronic components, including the transducer elements using conductive tracks (e.g. traces), pads, and other features. The conductive tracks may comprise sets of traces; for example, each of the transducer elements may be mounted to the PCB such that the transducer element 408 is in electrical communication with a set of traces. Each transducer element 408, sub-array, and/or the array 420 of transducer elements may be configured to transmit one or more sonar pulses and/or receive one or more sonar return signals. Unless otherwise stated, although FIG. 4 illustrates a linear array with transducer elements of a certain shape, different types of arrays (or sub-arrays), transducer elements, spacing, shapes, etc. may be utilized with various embodiments of the present invention. In the illustrated embodiment shown in FIG. 4, the transducer array 420 includes an emitting face 421. Within the transducer array 420, each transducer element 408 defines an emitting face 409. The shape of the transducer array 420 and/or the shape of transducer elements 408 may differ in other embodiments, and the number of transducer elements 408 in each transducer array 420 may also vary in other embodiments. For example, only a single transducer element 408 may be utilized in some embodiments.

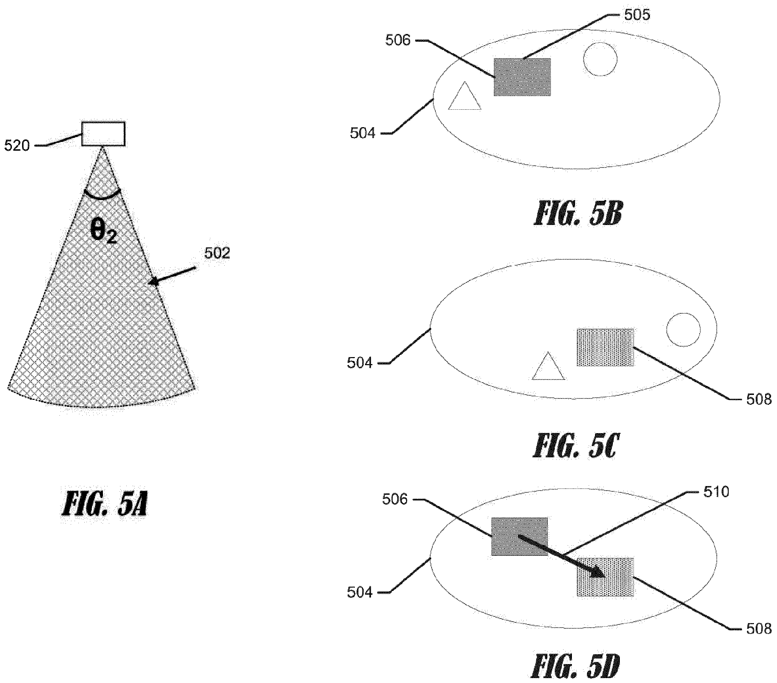

FIGS. 5A-5D illustrate the operation of a sonar transducer and an example identification and correction of misalignment for a sonar transducer. FIG. 5A illustrates a schematic view showing an example sonar beam 502 (e.g., with a beamwidth of θ₂) generated by a sonar transducer 520. FIG. 5B, 5C, and 5D each illustrate example schematic views showing an example area 504 scanned by the sonar transducer 520. As shown in FIG. 5B, the sonar data may reveal multiple objects in the scanned area. At least one controller may be provided that is configured to analyze the sonar data to identify an object 505 in the first area 504. The at least one controller may be configured to determine a first position 506 of the object 505, and this first position 506 may be determined using the sonar data. However, other marine devices such as a GPS, an AIS transceiver, or a camera may also be used to determine this first position. In some embodiments, multiple marine devices may be used to determine the first position 506 (e.g. sonar transducer and a camera with image recognition), and the data provided by the multiple marine devices may be weighted or averaged to determine the first position. This data may be collected by the marine device(s) and sent in a signal to a controller, or the marine device(s) may determine the first position and send a signal with information about the first position to the controller.

As shown in FIG. 5C, the at least one controller may be configured to determine an expected alignment characteristic by determining the second position 508 of the object 505. Such a second position may be determined using various additional data, such as from other devices. Some example additional data used to determine the second (or expected) position may be the expected orientation of the sonar transducer, historical sonar data associated with a current position of the watercraft, sonar data from other sonar transducers on the watercraft covering the same area, etc. Additionally, other information such as images from a camera, temperature data from a temperature sensors, or previous navigational data can be used to refine the second position 508 or to confirm that the first position 506 is correct. Once the first position 506 and the second position 508 of the object 505 are determined, the at least one controller may determine the difference between the first position 506 and the second position 508 of the object 505. This difference may provide a deviation from the expected alignment characteristic for a sonar transducer 520 or a sonar transducer assembly. This deviation is represented as a vector 510 in FIG. 5D.

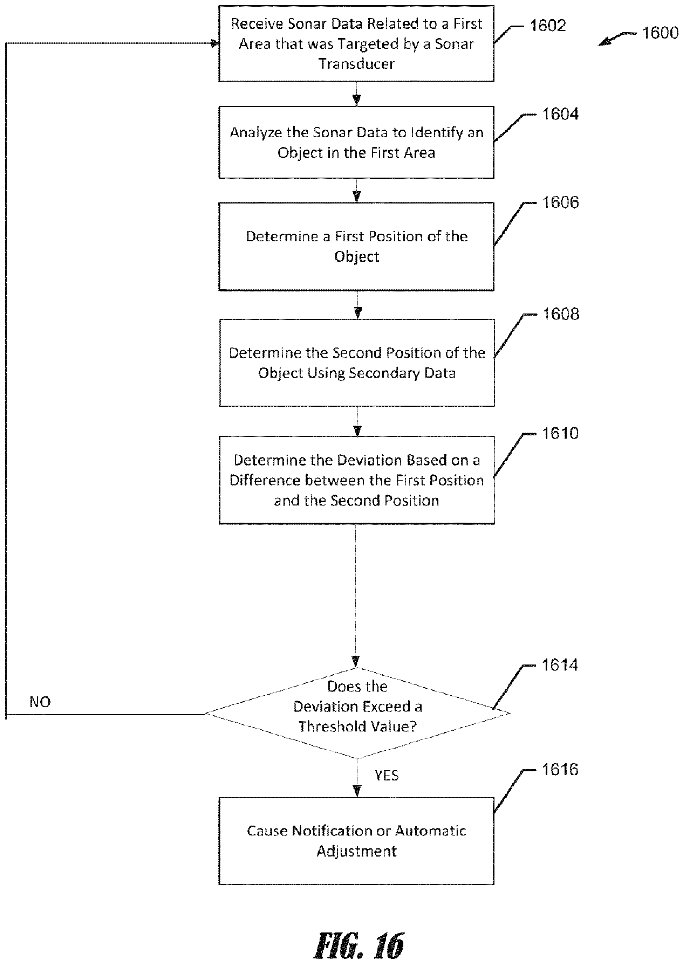

While FIGS. 5A through 5D and the accompanying text describe the correction of misalignment in positions determined by a sonar transducer, further detail on how this misalignment may be determined and addressed is presented in FIGS. 11 and 16 and the corresponding text. Further, as indicated above, once the misalignment is determined, various misalignment procedures may occur to correct the misalignment and/or inform the user, such as described herein. Similarly, while FIGs. 5A-5D are described with respect to positions within sonar data, it is appreciated that the term "position" may encompass depth, such that if a depth of an object within the sonar data is misaligned, then the system may recognize the misalignment and proceed with various indications and/or corrective action as described herein.

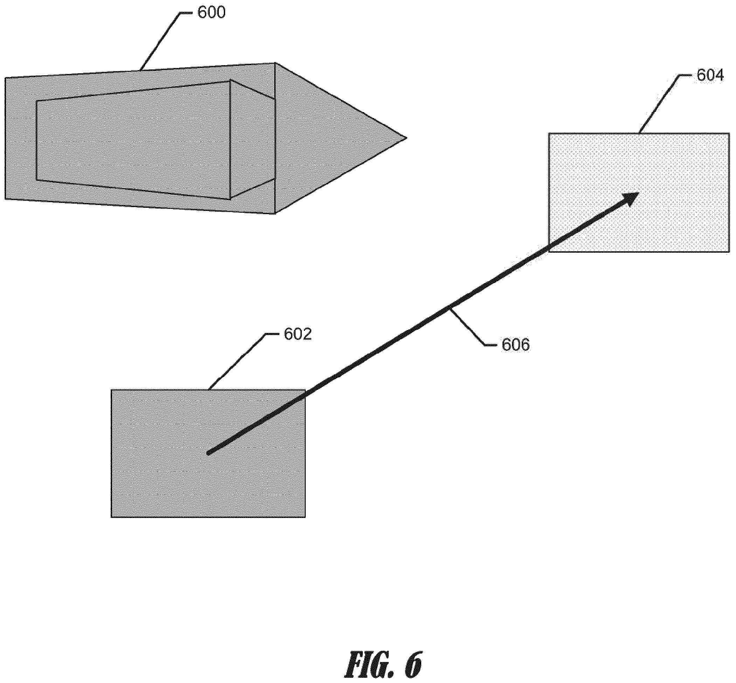

Another example marine device that may be misaligned is a position sensor. In some embodiments, the system may be configured to determine misalignment of one or more position sensors for the watercraft. FIG. 6 illustrates an example schematic view showing misalignment of a position sensor, in accordance with some embodiments discussed herein. A watercraft 600 is illustrated, and the at least one controller may identify a POI in some embodiments. The POI may be a fixed landmark such as a buoy, a shoreline, a lighthouse, a dock, etc. As described herein, fixed landmarks include objects that may move slightly in the short term, but stay in approximately the same position over time (e.g. a buoy).

The at least one controller may determine a first position 602 of the POI using marine data from marine devices with at least one of those marine devices being a position sensor. The first position 602 may be calculated by one or more marine devices such as a position sensor, radar, a GPS sensor, an AIS transceiver, a camera and an associated controller to perform image recognition, etc. Where multiple marine devices are used to determine the first position 602 (e.g. a radar and an AIS transceiver), the data provided by the multiple marine devices may be weighted or averaged to determine the first position 602. This data may be collected by the marine device(s) and sent in a signal to a controller, or the marine device(s) may determine the first position 602 and send a signal with information about the first position 602 to the controller.

The at least one controller may determine an expected position 604 of the POI using secondary data. The expected position 604 may be determined using various types of additional data, such as from other devices. Some example additional data used to determine the expected position 604 may be sonar data from a sonar transducer or historical sonar data associated with a current position of the watercraft, data generated from image recognition methods performed by a controller on an image taken by an onboard camera, and data from other devices that were not relied upon in the calculation of the first position 602 (e.g., navigation data, AIS data, etc.). Additionally, other data can be used to refine the expected position 604 or to confirm that the first position 602 is correct. This expected position 604 of the POI may constitute the expected alignment characteristic in this embodiment. The difference between the first position 602 of the POI and the expected position 604 of the POI may be determined. The difference is indicated by the vector 606. This difference may be the relevant deviation in the embodiment illustrated in FIG. 6.

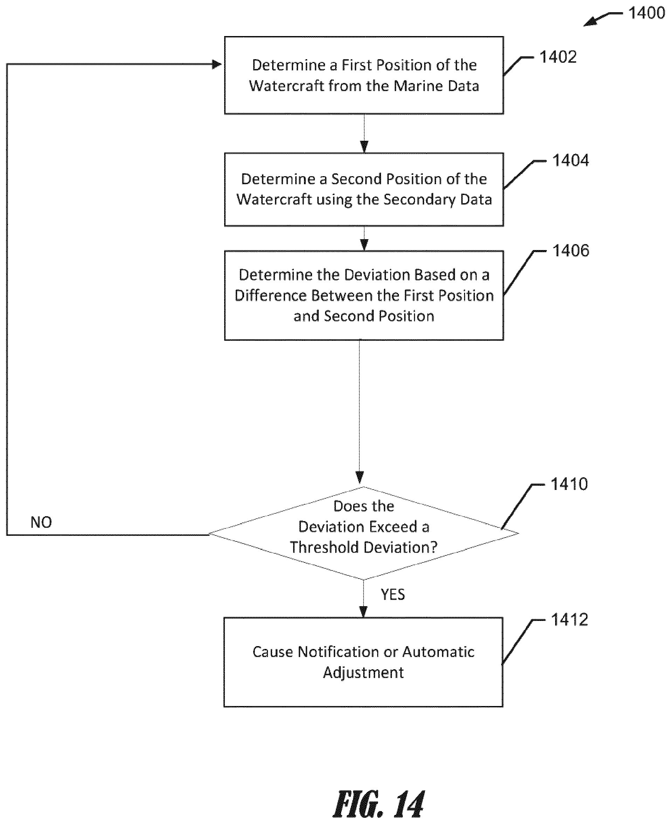

While FIG. 6 and the accompanying text describe the correction of misalignment a position sensor, further detail on how this misalignment may be determined and addressed is presented in FIGS. 11 and 14 and the corresponding text. Further, as indicated above, once the misalignment is determined, various misalignment procedures may occur to correct the misalignment and/or inform the user, such as described herein.

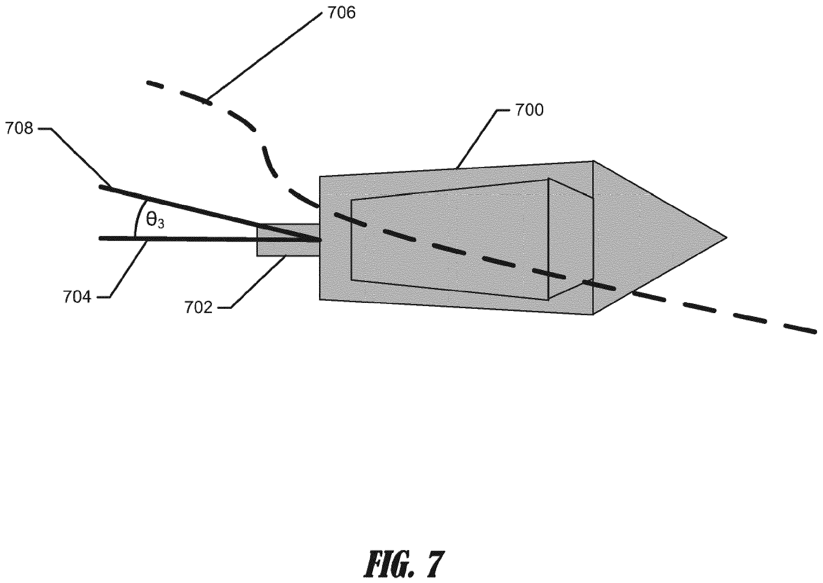

Other example marine devices that may be misaligned are a primary motor, a trolling motor, or a rudder. In some embodiments, the system may be configured to determine misalignment of one or more such marine devices for the watercraft. FIG. 7 illustrates a schematic view showing example misalignment of a primary motor, in accordance with some embodiments discussed herein (although such example explanation could be applied for a trolling motor or a rudder). A watercraft 700 and a primary motor 702 are illustrated. The at least one controller is further configured to determine a first direction 704 of the primary motor 702 from the marine data at a current time. This first direction 704 may be determined by placing a sensor at or proximate to the primary motor 702 to detect the angular orientation of the primary motor 702. If a primary motor 702 is fixed with a rudder so that the primary motor 702 and the rudder rotate together, a sensor at or proximate to the rudder may also be used to assist with a determination of the first direction.

The at least one controller is also configured to determine the expected alignment characteristic of the primary motor 702 using the secondary data. For example, the secondary data may comprise one or more past (or future) locations of the watercraft 700 and a current location of the watercraft 700. However, other secondary data may include other types of data as well such as water current data, wind speed data, temperature data, etc. In such a regard, the at least one controller may utilize this secondary data to determine a predicted path 706 for the watercraft 700. The at least one controller may determine the predicted path 706 using only location data of the watercraft 700 when the primary motor 702 was active, and a predicted path 706 may be generated from these past locations by fitting a continuous function to the location data. This location data may be stored in memory on the watercraft 700 or at another location, and the location data may have originated from a variety of devices such as a sonar transducer, a GPS, an autopilot, position sensor, a direction sensor, a GPS sensor, an AIS transceiver, a camera, etc. Alternatively, the past and current location of the watercraft 700 may be provided directly from devices without using a separate memory in the watercraft 700. Using the predicted path 706, the at least one controller may determine the expected alignment characteristics by determining a second direction 708 of the primary motor 702 at the current time. This second direction 708 aligns with a line tangential to the predicted path 706 at the current time, and where the predicted path 706 is linear, the second direction 708 is colinear to the predicted path 706.

An angular offset θ₃ may then be determined between the first direction 704 and the second direction 708, and this angular offset θ₃ may provide the relevant deviation in this embodiment. While the misalignment of a primary motor 702 is illustrated in FIG. 7, the misalignment of a trolling motor or a rudder may be addressed similar to the misalignment of a primary motor 702. Thus, a trolling motor or a rudder may be substituted in place of primary motor 702 in FIG. 7. While FIG. 7 and the accompanying text describe the correction of misalignment in a primary motor, a trolling motor, or a rudder, further detail on how this misalignment may be determined and addressed is presented in FIGS. 11, 15, and 17 and the corresponding text. Further, as indicated above, once the misalignment is determined, various misalignment procedures may occur to correct the misalignment and/or inform the user, such as described herein.

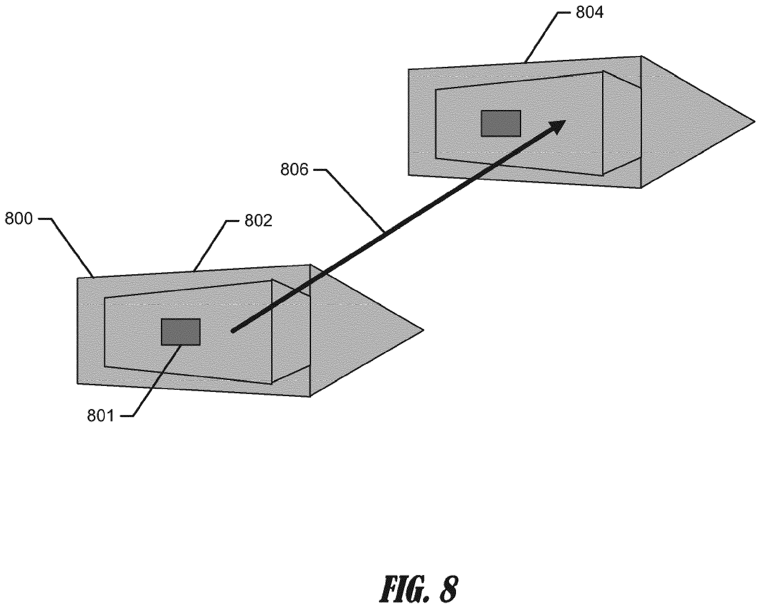

Another example marine device that may be misaligned is an autopilot. In some embodiments, the system may be configured to determine misalignment of the autopilot for the watercraft. FIG. 8 illustrates a schematic view of misalignment in an autopilot 801 of a watercraft 800. At least one controller may be configured to determine a first position 802 of the watercraft 800. The at least one controller may determine this first position 802 through the use of data provided by the autopilot 801. However, the first position may also be provided in part or in whole by other devices such as a sonar transducer, a GPS, an autopilot, position sensor, a direction sensor, a GPS sensor, an AIS transceiver, a camera, etc. In some embodiments, one or more controllers within the autopilot 801 may determine the first position 802.

The at least one controller may determine the expected alignment characteristic by determining a second position 804 of the watercraft 800 using the secondary data. Some example additional data used to determine the second position 804 may be sonar data from a sonar transducer or historical sonar data associated with a current position of the watercraft 800, data generated from image recognition methods performed by a controller on an image taken by an onboard camera, and data from other devices that were not relied upon in the calculation of the first position 802 (e.g., navigational data, AIS data, satellite data, cell phone data from a user's cell phone, etc.). Additionally, other information can be used to refine the second position 804 or to confirm that the first position 802 is correct.

The difference between the first position 802 and the second position 804 may then be determined by the at least one controller, and this difference may be the relevant deviation in this embodiment. This difference is represented by a vector 806 in FIG. 8. While FIG. 8 and the accompanying text describe the correction of misalignment in a primary motor, a trolling motor, or a rudder, further detail on how this misalignment may be determined and addressed is presented in FIGS. 11 and 14 and the corresponding text. Further, as indicated above, once the misalignment is determined, various misalignment procedures may occur to correct the misalignment and/or inform the user, such as described herein.

Though FIGs. 3A-8 describe example misalignment calculations for certain marine devices, other marine devices are contemplated for determination of misalignment. For example, various other sensors on a watercraft are contemplated (e.g., bilge pump, door sensors, light sensors, etc.).

### Example Misalignment Notifications and Corrective Actions

Once the misalignment is determined, various misalignment procedures can be taken depending on the configuration of the system and/or the desires of the user (e.g., a notification can be sent, the incoming radar data can be recalibrated automatically, a physical realignment can be made, etc.). In some embodiments, a corresponding corrective action can be determined based on the determined deviation (such as using artificial intelligence) and provided to the user and/or applied.

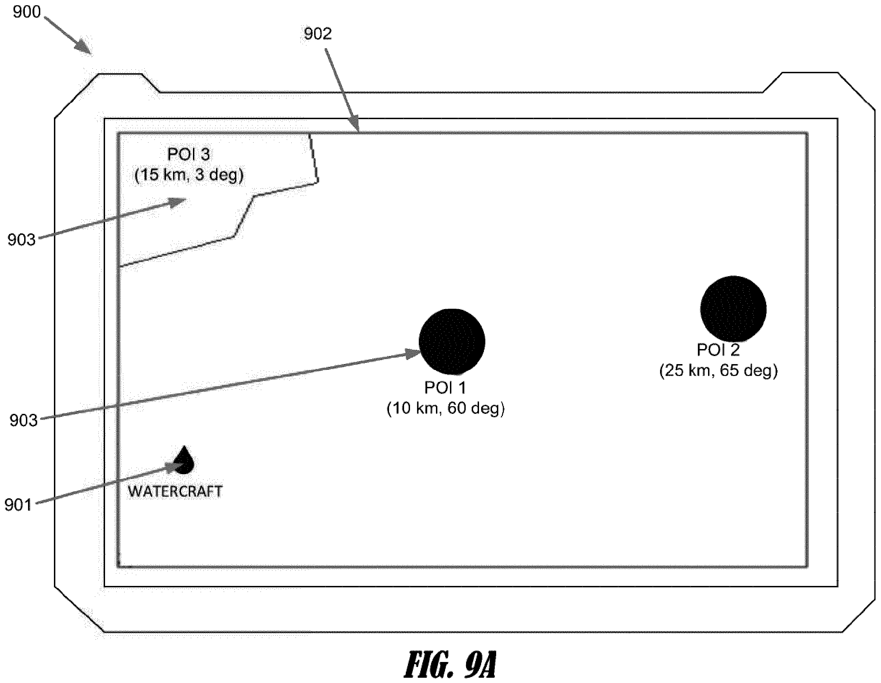

FIGS. 9A-9L illustrate various example images that may be presented on an example display 900 and notifications that may be presented related to a misalignment. FIG. 9A illustrates a display 900 including a first window 902 that is showing a radar image. The radar image comprises a symbol to represent the watercraft 901. The radar image also comprises symbols to represent various POIs 903. In the embodiment shown, a label is provided proximate to the POI 903 in the radar image, and information about the POI 903 may also be provided in the radar image such as the distance and the direction for the POI. However, in other embodiments, no label is included or a label is included without any additional information being provided. In FIG. 9A, the first window 902 covers a first area within the display 900.

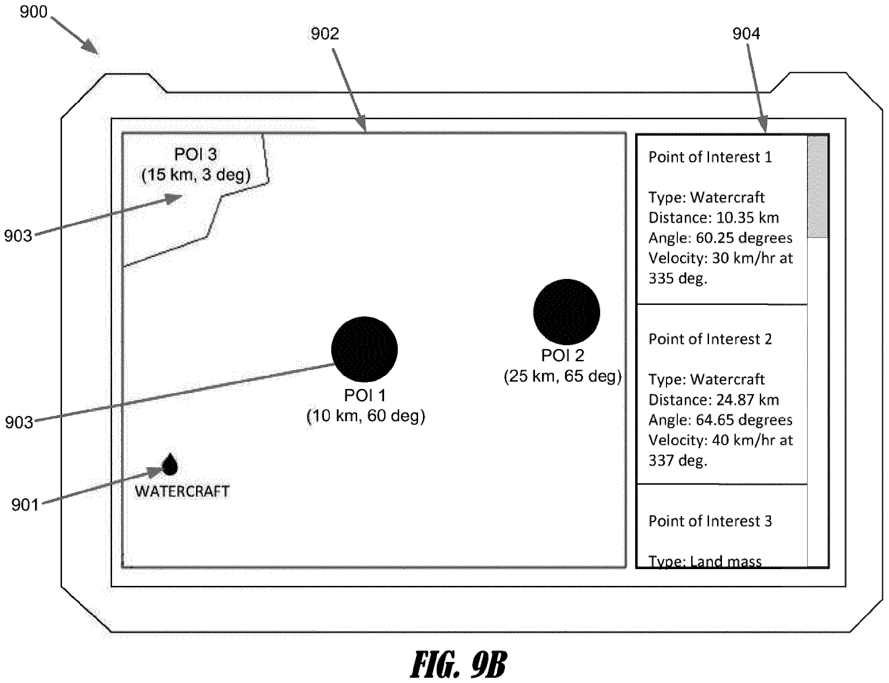

In FIG. 9B, a display 900 is provided with a first window 902 and a second window 904. The first window 902 is illustrating a radar image while the second window 904 comprises detailed information about the POIs 903 that are shown within the first window 902. In some embodiments, a POI 903 or the label for a POI 903 may be selected to cause the second window 904 to be presented, and in other embodiments, the second window 904 is always presented (such as based on a setting). While the second window 904 is illustrated as covering a separate area than the first window 902, the second window may be a pop-up window that shares the same area as the first window 902 in other embodiments.

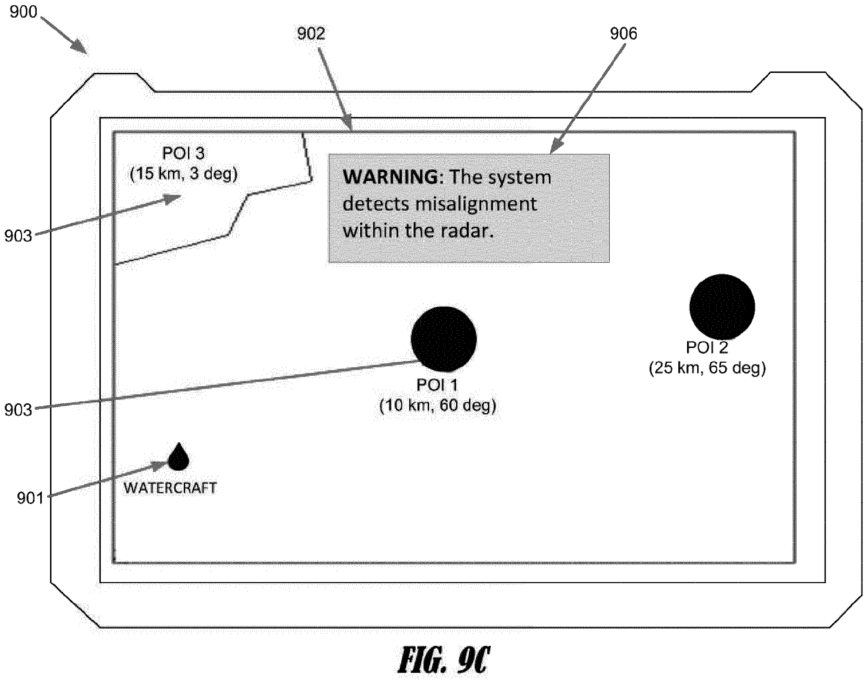

FIGS. 9C through 9L present various approaches that may be taken to notify a user that a misalignment is present or that the system has taken some action to address the misalignment. Although the following examples illustrate notifications on a marine electronic device (e.g., at a helm of a watercraft), such notifications may be provided to other devices (such as a remote device of the user (e.g., a cell phone). Additionally or alternatively, other types of notifications are contemplated (e.g., audible notifications, light-based or other feedback notifications, such as vibration, etc.).

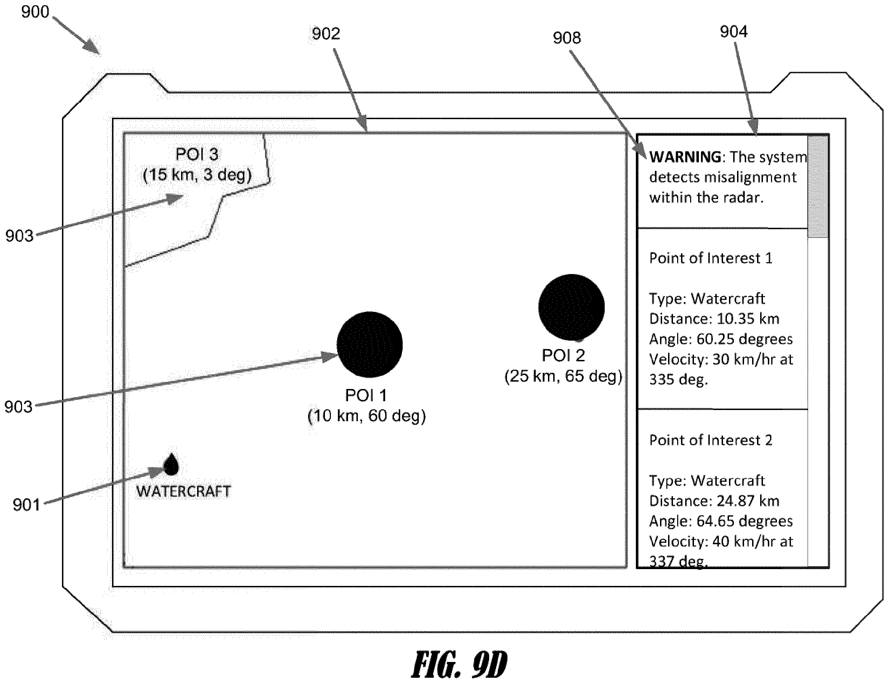

In FIGS. 9C and 9D, a notification 906 or 908 is provided that misalignment has been detected. This may allow the user to investigate the issue and to determine a corrective action. In FIG. 9C, a notification 906 is presented in a pop-up window indicating that a misalignment has been detected. This notification 906 may be presented within the same area as the first window 902. In FIG. 9D, a notification 908 is provided in the second window 904. In some embodiments, the notification 906 or 908 may be presented in an additional window that is within a separate area from the first window 902 and/or the second window 904, and the area covered by the first window 902 and/or the second window 904 may be decreased so that the additional window may be presented. However, the notification 906 or 908 may be provided in other manners within the display 900.

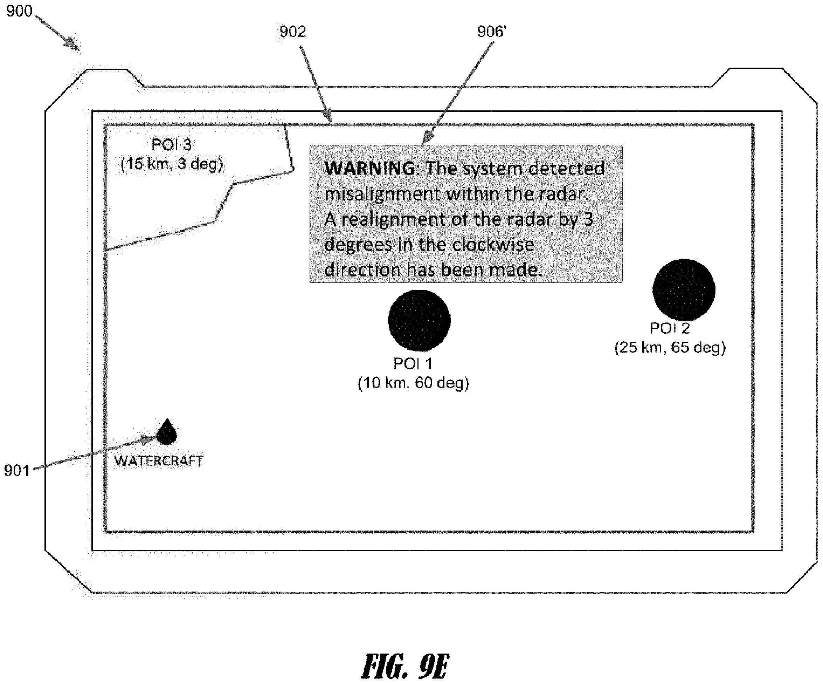

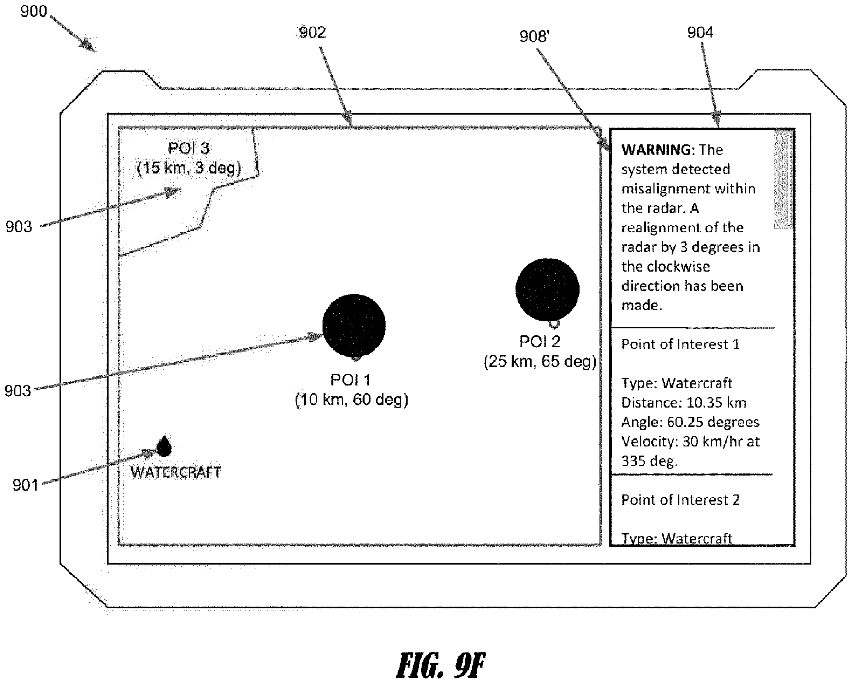

In FIGS. 9E and 9F, the system has already made a physical adjustment to the radar so that realigned radar data will be subsequently received. A notification 906' or 908' is presented with a warning to indicate that a misalignment was detected, and the notification 906' or 908' also indicates how the radar was physically adjusted (e.g., using a mechanical device such as a motor, a gear, etc.). In some embodiments, additional information may be provided. For example, information may be presented about the length of time that the radar may have been misaligned, whether previous data may still be inaccurate, how any inaccuracy may have affected the marine devices, etc.

In FIG. 9E, the notification 906' is presented within a pop-up window to indicate that a misalignment has been detected. This pop-up window may be presented within the same area as the first window 902. In FIG. 9F, a notification 908' is provided in the second window 904. In some embodiments, the notification 906' or 908' may be presented in an additional window that is within a separate area from the first window 902 and/or the second window 904, and the area covered by the first window 902 and/or the second window 904 may be decreased so that the additional window may be presented. However, the notification 906' or 908' may be provided in other manners as described herein.

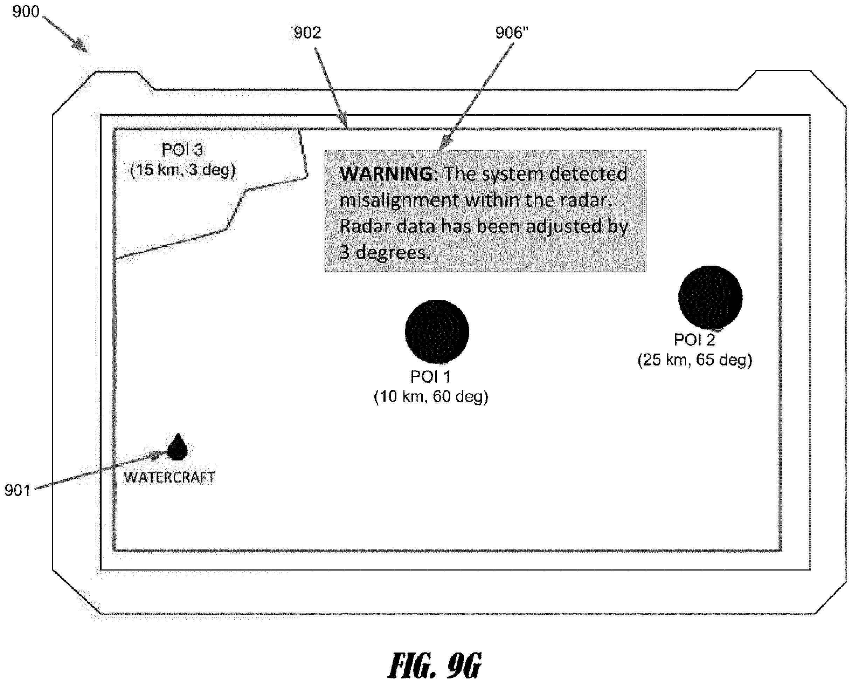

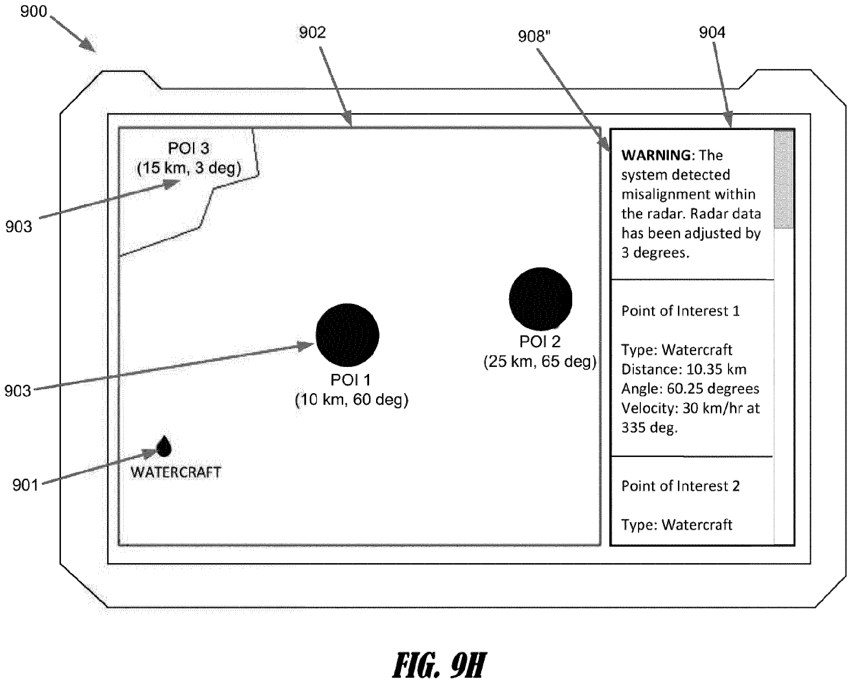

In FIGS. 9G and 9H, the system has already made a data adjustment to the radar data so as to produce recalibrated marine data. A notification 906" or 908" is presented with a warning to indicate that a misalignment was detected, and the notification 906" or 908" may also indicate how the data was adjusted. In FIGS. 9G and 9H, the notification 906" or 908" states that radar data has been adjusted by 3 degrees, but additional information may be provided. For example, information may be presented about the length of time that the radar may have been misaligned, whether previous data may still be inaccurate, how any inaccuracy may have affected the marine devices, etc.

In FIG. 9G, the notification 906" is presented within a pop-up window. This pop-up window may be presented within the same area as the first window 902. In FIG. 9H, the notification 908" is provided in the second window 904. In some embodiments, the notification 906" or 908" may be presented in an additional window that is within a separate area from the first window 902 and/or the second window 904, and the area covered by the first window 902 and/or the second window 904 may be decreased so that the additional window may be presented. However, the notification 906" or 908" may be provided in other manners.

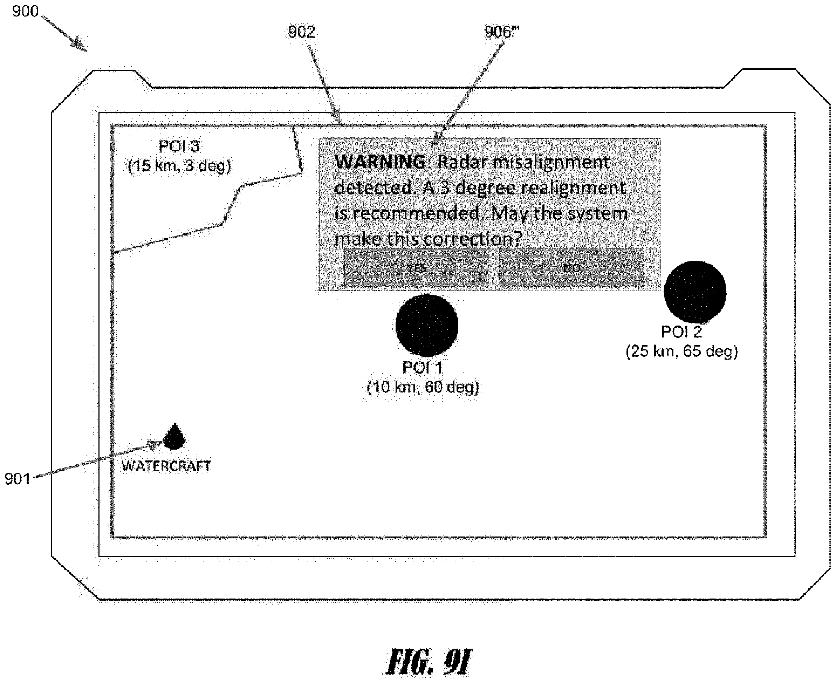

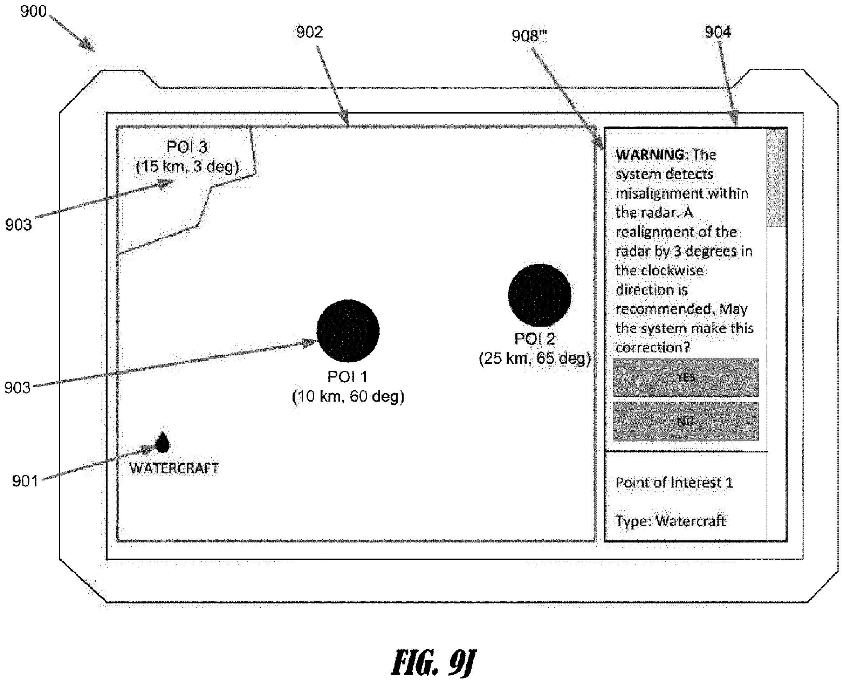

In FIGS. 9I and 9J, the system has already determined an appropriate corrective action that may be taken. A notification 906'" or 908'" is presented on the display 900 to indicate that a radar misalignment was detected, and a recommended corrective action is provided. The notification 906'" or 908'" also waits for a user to authorize the recommended corrective action before making the correction, and buttons are provided for the user to provide input as to whether the recommended corrective action is authorized. In FIGS. 9I and 9J, a physical adjustment is recommended that will adjust the radar by 3 degrees. However, in other embodiments, the recommended corrective action may be a data adjustment or some other action to troubleshoot issues with the radar. Other information may also be provided such as information about the length of time that the radar may have been misaligned, whether previous data may still be inaccurate, how any inaccuracy may have affected the marine devices, etc.

In FIG. 9I, the notification 906'" is presented within a pop-up window. This pop-up window may be presented within the same area as the first window 902. In FIG. 9J, the notification 908'" is provided in the second window 904. In some embodiments, the notification 906'" or 908'" may be presented in an additional window that is within a separate area from the first window 902 and/or the second window 904, and the area covered by the first window 902 and/or the second window 904 may be decreased so that the additional window may be presented. However, the notification 906'" or 908'" may be provided in other manners.

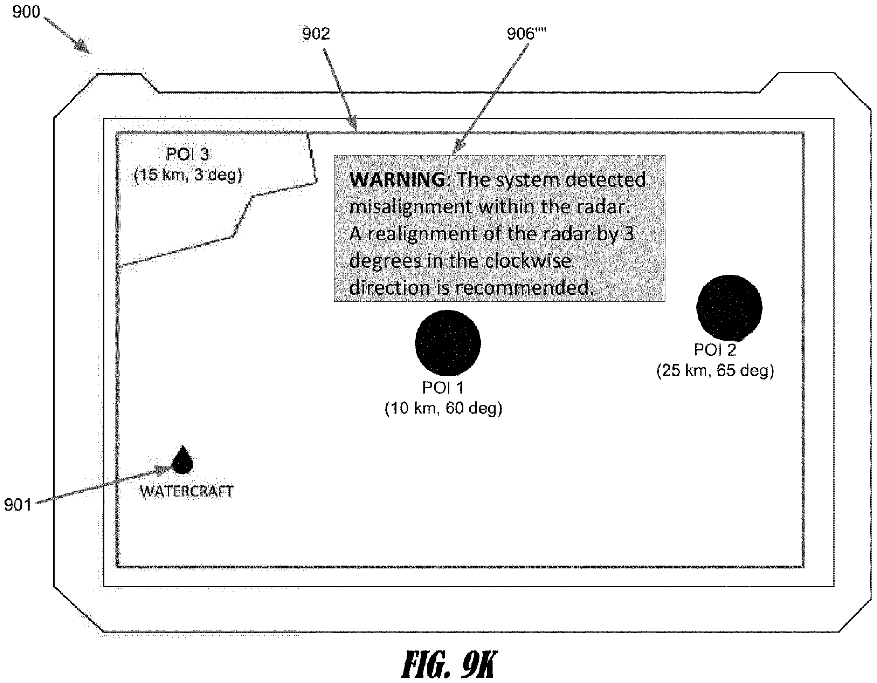

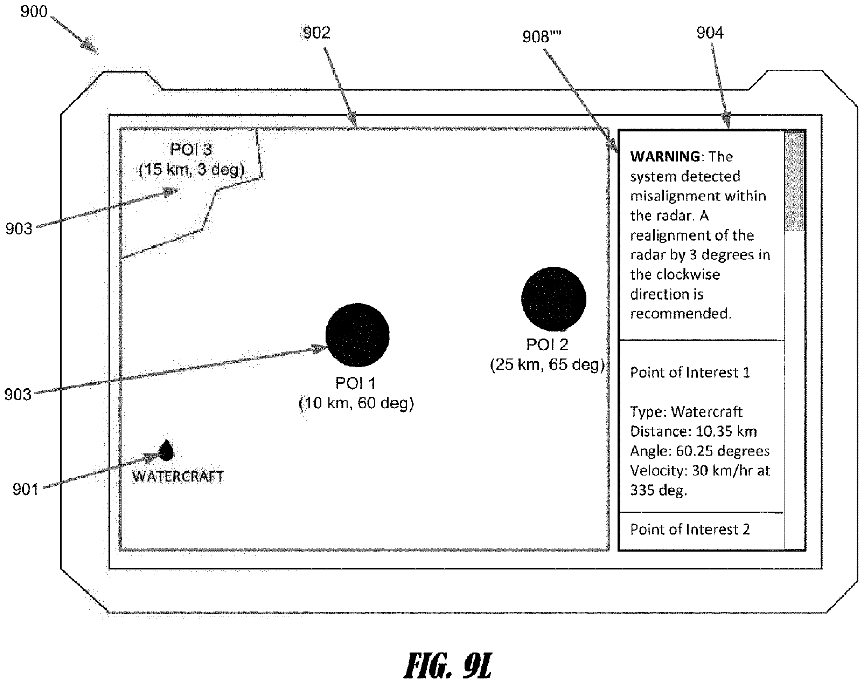

In FIGS. 9K and 9L, the system has determined an appropriate corrective action that may be taken. A notification 906"" or 908"" is presented on the display 900 to indicate that a radar misalignment was detected, and a recommended corrective action is provided. In FIGS. 9K and 9L, a physical adjustment is recommended that will adjust the radar by 3 degrees. In the embodiments illustrated in FIGS. 9K and 9L, the system may leave it to the operator to make the recommended corrective action. However, in other embodiments, the recommended corrective action may be a data adjustment or some other action to troubleshoot issues with the radar. Other information may also be provided such as information about the length of time that the radar may have been misaligned, whether previous data may still be inaccurate, how any inaccuracy may have affected the marine devices, etc.

In FIG. 9K, the notification 906"" is presented within a pop-up window. This pop-up window may be presented within the same area as the first window 902. In FIG. 9L, the notification 908"" is provided in the second window 904. In some embodiments, the notification 906ʺʺ or 908"" may be presented in an additional window that is within a separate area from the first window 902 and/or the second window 904, and the area covered by the first window 902 and/or the second window 904 may be decreased so that the additional window may be presented. However, the notification 906"" or 908"" may be provided in other manners.

### Example System Architecture

FIG. 10 illustrates a block diagram of an example system 1000 of various embodiments of the present invention described herein. The illustrated system 1000 includes a marine electronic device 1005. The system 1000 may comprise numerous marine devices. As shown in FIG. 10, a transducer assembly 1062, a radar 1056, a rudder 1057, a primary motor 1058, a trolling motor 1059, and additional sensors/devices 1060 may be provided as marine devices, but other marine devices may also be provided. One or more marine devices may be implemented on the marine electronic device 1005 as well. For example, a position sensor 1045, a direction sensor 1048, an autopilot 1050, and other sensors 1052 may be provided within the marine electronic device 1005. These marine devices can be integrated within the marine electronic device 1005, integrated on the watercraft at another location and connected to the marine electronic device 1005, or the marine devices may be implemented at a remote device 1054 in some embodiments. The system 1000 may include any number of different systems, modules, or components; each of which may comprise any device or means embodied in either hardware, software, or a combination of hardware and software configured to perform one or more corresponding functions described herein.

The marine electronic device 1005 may include at least one controller 1010, a memory 1020, a communication interface 1030, a user interface 1035, a display 1040, autopilot 1050, and one or more sensors (e.g. position sensor 1045, direction sensor 1048, other sensors 1052). One or more of the components of the marine electronic device 1005 may be located within a housing or could be separated into multiple different housings (e.g., be remotely located).

The at least one controller 1010 may be any means configured to execute various programmed operations or instructions stored in a memory device (e.g., memory 1020) such as a device or circuitry operating in accordance with software or otherwise embodied in hardware or a combination of hardware and software (e.g. a controller operating under software control or the controller embodied as an application specific integrated circuit (ASIC) or field programmable gate array (FPGA) specifically configured to perform the operations described herein, or a combination thereof) thereby configuring the device or circuitry to perform the corresponding functions of the at least one controller 1010 as described herein. In this regard, the at least one controller 1010 may be configured to analyze electrical signals communicated thereto to provide or receive marine data from one or more marine devices and secondary data from one or more second devices. For example, the at least one controller 1010 may be configured to receive marine data and secondary data, determine a deviation in the data, and determine a corrective action based on the deviation.

In some embodiments, the at least one controller 1010 may be further configured to implement sonar signal processing, such as in the form of a sonar signal processor (although in some embodiments, portions of the at least one controller 1010 or the sonar signal processor could be located within the transducer assembly 1062). In some embodiments, the at least one controller 1010 may be configured to perform enhancement features to improve the display characteristics of data or images, collect or process additional data, such as time, temperature, GPS information, waypoint designations, or others, or may filter extraneous data to better analyze the collected data. It may further implement notices and alarms, such as those determined or adjusted by a user, to reflect depth, presence of fish, proximity of other vehicles (e.g. watercraft), etc.

In an example embodiment, the memory 1020 may include one or more non-transitory storage or memory devices such as, for example, volatile and/or non-volatile memory that may be either fixed or removable. The memory 1020 may be configured to store instructions, computer program code, marine data, such as sonar data, chart data, location/position data, and other data associated with the navigation system in a non-transitory computer readable medium for use, such as by the at least one controller 1010 for enabling the marine electronic device 1005 to carry out various functions in accordance with example embodiments of the present invention. For example, the memory 1020 could be configured to buffer input data for processing by the at least one controller 1010. Additionally or alternatively, the memory 1020 could be configured to store instructions for execution by the at least one controller 1010.

The communication interface 1030 may be configured to enable communication to external systems (e.g. an external network 1002). In this manner, the marine electronic device 1005 may retrieve stored data from a remote device 1054 via the external network 1002 in addition to or as an alternative to the onboard memory 1020. Additionally or alternatively, the marine electronic device 1005 may transmit or receive data, such as sonar signal data, sonar return data, sonar image data or the like to or from a transducer assembly 1062. In some embodiments, the marine electronic device 1005 may also be configured to communicate with other devices or systems (such as through the external network 1002 or through other communication networks, such as described herein). For example, the marine electronic device 1005 may communicate with a propulsion system of the watercraft 100 (e.g., for autopilot control); a remote device (e.g., a user's mobile device, a handheld remote, etc.); or another system.

The communications interface 1030 of the marine electronic device 1005 may also include one or more communications modules configured to communicate with one another in any of a number of different manners including, for example, via a network. In this regard, the communications interface 1030 may include any of a number of different communication backbones or frameworks including, for example, Ethernet, the NMEA 2000 framework, GPS, cellular, WiFi, or other suitable networks. The network may also support other data sources, including GPS, autopilot, engine data, compass, radar, etc. In this regard, numerous other peripheral devices (including other marine electronic devices or transducer assemblies) may be included in the system 1000.

The position sensor 1045 may be configured to determine the current position and/or location of the marine electronic device 1005 (and/or the watercraft 100). For example, the position sensor 1045 may comprise a GPS, bottom contour, inertial navigation system, such as machined electromagnetic sensor (MEMS), a ring laser gyroscope, or other location detection system. Alternatively or in addition to determining the location of the marine electronic device 1005 or the watercraft 100, the position sensor 1045 may also be configured to determine the position and/or orientation of a POI outside of the watercraft 100.

The display 1040 (e.g. one or more screens) may be configured to present images and may include or otherwise be in communication with a user interface 1035 configured to receive input from a user. The display 1040 may be, for example, a conventional LCD (liquid crystal display), a touch screen display, mobile device, or any other suitable display known in the art upon which images may be displayed.

In some embodiments, the display 1040 may present one or more sets of data (or images generated from the one or more sets of data). Such data includes chart data, radar data, sonar data, weather data, location data, position data, orientation data, sonar data, or any other type of information relevant to the watercraft. Marine data may be received from marine devices such as a radar 1056, a sonar transducer assembly 1062, a primary motor 1058 or an associated sensor, a trolling motor 1059 or an associated sensor, an autopilot 1050, a rudder 1057 or an associated sensor, a position sensor 1045, a direction sensor 1048, other sensors 1052, a remote device 1054, or other devices. In some embodiments, the display 1040 may be configured to present such data simultaneously as one or more layers or in split-screen mode. In some embodiments, a user may select any of the possible combinations of the data for display (e.g. sonar data in one window and radar data in another). The display 1040 may operate similar to the display 900 illustrated in FIGS. 9A-9L.

In some further embodiments, various sets of data, referred to above, may be superimposed or overlaid onto one another. For example, a route may be applied to (or overlaid onto) a chart (e.g. a map or navigational chart). Additionally or alternatively, depth information, weather information, radar information, sonar information, or any other navigation system inputs may be applied to one another.

The user interface 1035 may include, for example, a keyboard, keypad, function keys, mouse, scrolling device, input/output ports, touch screen, or any other mechanism by which a user may interface with the system.

Although the display 1040 of FIG. 10 is shown as being directly connected to the at least one controller 1010 and within the marine electronic device 1005, the display 1040 could alternatively be remote from the at least one controller 1010 and/or marine electronic device 1005. Likewise, in some embodiments, the position sensor 1045 and/or user interface 1035 could be remote from the marine electronic device 1005.

The marine electronic device 1005 may include one or more other sensors/devices 1052, such as configured to measure or sense various other conditions. The other sensors/devices 1052 may include, for example, an air temperature sensor, a water temperature sensor, a current sensor, a light sensor, a wind sensor, a speed sensor, or the like.

The transducer assembly 1062 illustrated in FIG. 10 includes one transducer array 1067. In some embodiments, more transducer arrays could be included, or other transducer elements could be included. As indicated herein, the transducer assembly 1062 may also include a sonar signal processor or other processor (although not shown) configured to perform various sonar processing. In some embodiments, the controller (e.g., at least one controller 1010 in the marine electronic device 1005, a controller (or processor portion) in the transducer assembly 1062, or a remote controller - or combinations thereof) may be configured to filter sonar return data and/or selectively control transducer elements of the transducer array 1067. For example, various processing devices (e.g., a multiplexer, a spectrum analyzer, A-to-D converter, etc.) may be utilized in controlling or filtering sonar return data and/or transmission of sonar signals from the transducer array 1067.

The transducer assembly 1062 may also include one or more other systems, such as various sensor(s) 1066. For example, the transducer assembly 1062 may include an orientation sensor, such as gyroscope or other orientation sensor (e.g., accelerometer, MEMS, etc.) that can be configured to determine the relative orientation of the transducer assembly 1062 and/or the one or more arrays 1067 - such as with respect to a waterline, the top surface of the body of water, or other reference. In some embodiments, additionally or alternatively, other types of sensor(s) are contemplated, such as, for example, a water temperature sensor, a current sensor, a light sensor, a wind sensor, a speed sensor, or the like.

The components presented in FIG. 10 may be rearranged to alter the connections between components. For example, in some embodiments, a marine device outside of the marine electronic device 1005, such as the radar 1056, may be directly connected to the at least one controller 1010 rather than being connected to the communication interface 1030. Additionally, sensors and devices implemented within the marine electronic device 1005 may be directly connected to the communications interface in some embodiments rather than being directly connected to the at least one controller 1010.

### Example Flowchart(s) and Operations

Embodiments of the present invention provide methods, apparatus, and computer program products for alignment of marine systems or devices according to various embodiments described herein. Various examples of the operations performed in accordance with embodiments of the present invention will now be provided with reference to FIGs. 11-17.

FIG. 11 is a flowchart of an example method 1100 for identifying and addressing a misalignment in a marine device, in accordance with some embodiments discussed herein. It is contemplated that one or more controllers or another suitable device may perform the method 1100.

At operation 1102, marine data is received from one or more marine devices. These marine devices may be associated with the watercraft in some embodiments, and these marine devices may be one or more of a radar, a sonar transducer, a primary motor, a trolling motor, an autopilot, a rudder, a position sensor, a direction sensor, or another device or sensor.

At operation 1104, secondary data is received. Secondary data is associated with one or more second devices, and the secondary data may be provided from second devices or from another source. These second devices may be different from the marine devices that provided the marine data, and the second devices may include other devices that are not assisting in calculating the alignment characteristic for the marine device. These second devices may comprise radar, a sonar transducer, a GPS, a compass, a heading sensor, a trolling motor, an autopilot, position sensor, a direction sensor, a GPS sensor, an AIS transceiver, a temperature sensor, a camera, a memory comprising various data, such as navigational data, or other data sources. However, other second devices may also be used to provide secondary data. Secondary data may also be stored on memory in the watercraft or at another location, or secondary data may be transmitted through a network, through a wired connection, or through a wireless connection.

At operation 1106, an expected alignment characteristic is determined for the one or more marine devices based on the secondary data. This expected alignment characteristic may vary depending on the type of marine device or marine data that is being analyzed. For example, where a primary motor is being used, the direction of the primary motor may be analyzed, and the expected alignment characteristic may be an expected direction of the primary motor determined using secondary data. However, where a position sensor is being used, the position of a POI may be determined, and the expected alignment characteristic may be an expected position of the POI determined using secondary data.

At operation 1108, an alignment characteristic is determined for the one or more marine devices. This alignment characteristic may be based on the marine data. For example, where a primary motor is being used as one of the marine devices, the direction of the primary motor at a current time may be analyzed using marine data, and the alignment characteristic may be an expected direction of the primary motor. However, multiple alignment characteristics may be determined at operation 1108 for different marine devices.

At operation 1110, a deviation is determined from the expected alignment characteristic. This deviation may be between the alignment characteristic (determined from marine data) and the expected alignment characteristic.

At operation 1112, a determination is made as to whether the deviation is greater than a threshold deviation. In some embodiments, this threshold deviation may be very low, and the threshold deviation may even be zero in some embodiments. The operator may provide the threshold deviation in some embodiments. In some embodiments, the deviation may be communicated as a signal, and this signal may be received by a low-pass filter to develop a filtered signal. In this regard, the method may be less sensitive to sudden changes in data and, thus, not unduly impacted by outlier data. If the deviation is not greater than the threshold deviation, then the method may end or it may return to operation 1102 and proceed from there. In some embodiments, the method may wait for user input before proceeding with operation 1102. If the deviation at operation 1112 is greater than the threshold deviation, then the method 1100 proceeds to operation 1114.

At operation 1114, a notification is caused indicating a misalignment of the one or more marine devices to be provided to a user. This notification may be presented on the display (900 or 1040), and the notification may also provide a recommended corrective action for the operator. However, the notification may be provided to the user in the display in a variety of other ways, such as discussed in conjunction with FIGS. 9A-9L, and the notification may also be provided in alternative ways that do not require the use of the display. For example, a signal light may be provided that will turn on or change colors, a buzzer may generate noise, a speaker may provide a notification to the user, etc. In some embodiments, an option may be created for a user to contact a serviceperson to schedule maintenance for the marine device (such as to realign the marine device). In some embodiments, such a feature may be done automatically, providing the user a maintenance repair schedule.

At operation 1116, a data adjustment is made to the marine data so as to produce recalibrated marine data. Data regarding the data adjustment may be stored in the memory 1020 (FIG. 10) and may be updated as the method 1100 performs additional iterations. However, data regarding the data adjustment may be stored at other locations. For example, the data may be stored at a remote device, at a memory associated with the specific marine or second devices, etc.

At operation 1118, a physical adjustment is applied to the one or more marine devices so as to subsequently receive realigned marine data from the one or more marine devices. Turning back to FIG. 10, at least one controller 1010 or another suitable device may send a correction signal to a marine device that is implemented regarding the marine electronic device 1005 directly or indirectly (e.g., a mechanical device (e.g., motor and gears, linear actuator, etc.) may realign the marine device). For marine devices that are not implemented on the marine electronic device 1005, the at least one controller 1010 may communicate through the communication interface 1030 and/or external network 1002 to send a correction signal.

Referring back to FIG. 11, operations 1114, 1116, and 1118 may be performed simultaneously or in a different order in other embodiments. Additionally, some or all of these operations may not be performed in certain embodiments, and additional operations may be performed in other embodiments to take action after a determination that the deviation exceeds a threshold deviation at operation 1112. For example, depending on the configuration of the corresponding system (such as based on user preference), only one or only two of operations 1114, 1116, and 1118 may be performed.

Depending on the configuration, at operation 1120, the method 1100 may proceed back to operation 1102 and repeat the described operations. Thus, where at least one controller is being used to complete the method, the at least one controller may be configured to repetitively determine any deviation from the expected alignment characteristic based on the marine data. However, in other embodiments, the method 1100 may wait for user input before proceeding with operation 1102, or the method 1100 may wait a specified period of time before proceeding with operation 1102. In some embodiments, the method 1100 may be restarted only upon a detection of an event such as a sudden shift in the watercraft or a particular marine device, or the method 1100 may be restarted upon detection of anomalies in other data.

FIG. 12 is a flowchart of an example method 1200 for identifying and addressing a misalignment in a radar or a direction sensor, in accordance with some embodiments discussed herein. This method 1200 may be utilized for a variety of direction sensors, including, but not limited to, a compass or a heading sensor.

At operation 1202, a first angular position is determined for a POI using marine data from the radar and/or the direction sensor. Then, at operation 1204, a second angular position is determined for the POI using secondary data. The POI may be a fixed landmark such as a shoreline, a buoy, a lighthouse, a dock, etc. The fixed landmark may move slightly in the short term, but will stay in approximately the same position over time (e.g. a buoy). More than one angular position may be determined for a single POI, and angular positions may be determined for specific locations on a POI. The first angular position and the second angular position may be determined in a variety of ways, including by calculating the angular position of single location on the external surface of the POI, by calculating the angular position of an expected center point of the POI, by calculating the angular position of several locations on the POI, etc. Secondary data may be associated with one or more second devices, and these second devices are different devices from the one or more marine devices that provided the marine data.

At operation 1206, a deviation is determined based on an angular offset between the first angular position and the second angular position.

At operation 1210, in response to determining the deviation, the at least one controller may determine if the deviation is greater than a threshold value. In some embodiments, this threshold may be very low, and the threshold may even be zero in some embodiments. If the deviation is not greater than the threshold, then the method 1200 may end or may return to operation 1202 and automatically proceed through subsequent operations so that the method 1200 is repetitively performed. In some embodiments, the method 1200 may wait for user input before proceeding with operation 1202, the method 1200 may wait for a specified time, etc. In some embodiments, the method 1200 may be restarted only upon a detection of an event such as a sudden shift in the watercraft or a particular marine device, or the method 1200 may be restarted upon detection of anomalies in other data.

If the deviation or signal is greater than a threshold value, then the method 1200 may proceed to operation 1212. At operation 1212, the method 1200 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. The notification may comprise a recommended course of action for an operator. However, other actions may be taken as well, such as the presentation of a corrective action. The method 1200 described in reference to FIG. 12 may be adapted to address other performance characteristics-for example, other embodiments address misalignment of the radar's identified position of the watercraft and inaccuracy in measured distances of POIs.

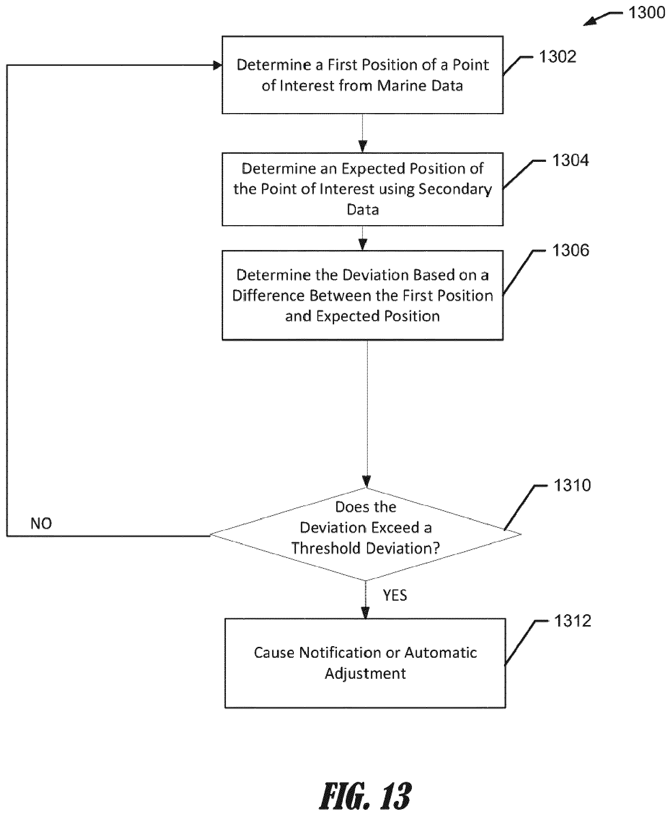

FIG. 13 is a flowchart of an example method 1300 for identifying and addressing a misalignment in a position sensor, in accordance with some embodiments discussed herein. This position sensor may, for example, be a GPS. At operation 1302, a first position is determined of a POI using marine data. Then, at operation 1304, an expected position is determined for a POI using secondary data. The POI may be a fixed landmark such as a shoreline, a buoy, a lighthouse, a dock, etc. The fixed landmark may move slightly in the short term, but will stay in approximately the same position over time (e.g. a buoy). More than one position may be determined for a single POI, and positions may be determined for specific locations on a POI. The first position and the expected position may be determined in a variety of ways, including by calculating the position of single point on the external surface of the POI, by calculating the position of an expected center point of the point of interest, etc.

At operation 1306, a deviation is determined based on a difference between the first position and the expected position.

At operation 1310, in response to determining the deviation, the at least one controller may determine if the deviation is greater than a threshold value. In some embodiments, this threshold may be very low, and the threshold may even be zero in some embodiments. If the deviation is not greater than the threshold, then the method may end or may return to operation 1302 and automatically proceed through subsequent operations so that the method 1300 is repetitively performed. In some embodiments, the method 1300 may wait for user input before proceeding with operation 1302, the method may wait for a specified time, etc. In some embodiments, the method 1300 may be restarted only upon a detection of an event such as a sudden shift in the watercraft or a particular marine device, or the method 1300 may be restarted upon detection of anomalies in other data.

If the deviation is greater than a threshold value, then the method 1300 may proceed to operation 1312. At operation 1312, the method 1300 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. The notification may comprise a recommended course of action for an operator. However, other actions may be taken as well. The method 1300 described in reference to FIG. 13 may be adapted to address other performance characteristics-for example, other embodiments address misalignment of the position sensor's identified position of the watercraft.

FIG. 14 is a flowchart of an example method 1400 for identifying and addressing a misalignment in an autopilot, in accordance with some embodiments discussed herein. At operation 1402, a first position of the watercraft is determined from marine data. Then, at operation 1404, a second position of the watercraft is determined from the secondary data. More than one position may be determined for the watercraft, and positions may be determined for specific locations on the watercraft.

At operation 1406, a deviation is determined based on a difference between the first position and the second position.

At operation 1410, in response to determining the deviation, the at least one controller may determine if the deviation is greater than a threshold value. In some embodiments, this threshold may be very low, and the threshold may even be zero in some embodiments. If the deviation is not greater than the threshold, then the method 1400 may end or may return to operation 1402 and automatically proceed through subsequent operations so that the method 1400 is repetitively performed. In some embodiments, the method 1400 may wait for user input before proceeding with operation 1402, the method 1400 may wait for a specified time, etc. In some embodiments, the method 1400 may be restarted only upon a detection of an event such as a sudden shift in the watercraft or a particular marine device, or the method 1400 may be restarted upon detection of anomalies in other data.

If the deviation is greater than a threshold value, then the method 1400 may proceed to operation 1412. At operation 1412, the method 1400 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. However, other actions may be taken as well. The method 1400 described in reference to FIG. 14 may be adapted to address other performance characteristics-for example, other embodiments correct misalignment of the autopilot using the position of POIs, the angular direction of POIs, and/or the direction of the watercraft.

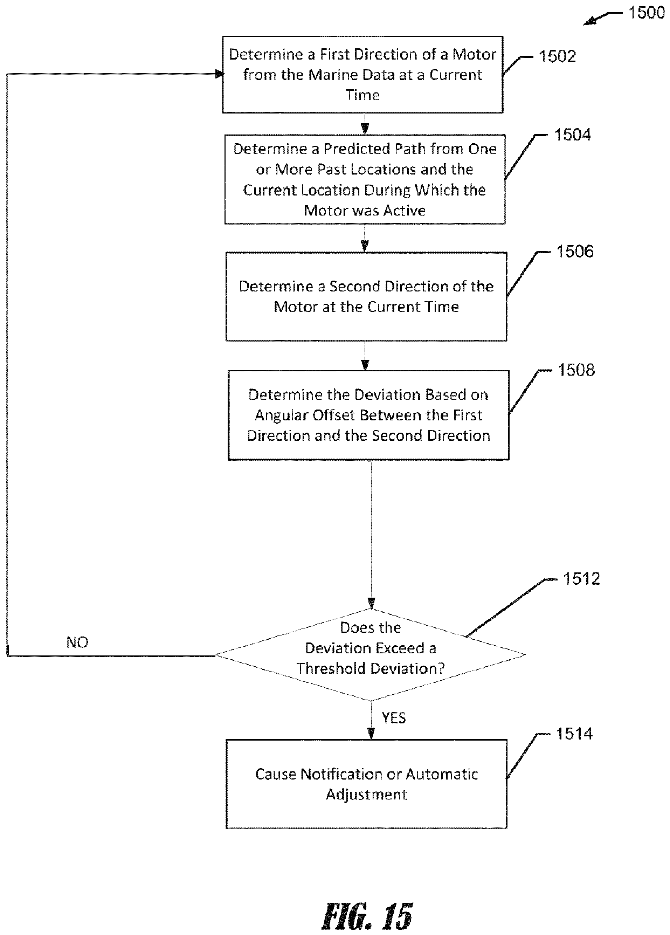

FIG. 15 is a flowchart of an example method 1500 for identifying and addressing a misalignment in a primary motor or a trolling motor, in accordance with some embodiments discussed herein. At operation 1502, a first direction of a motor is determined from the marine data at a current time. The first direction of the motor may be determined in a variety of ways, including, but not limited to, by having a sensor associated with the motor to determine the direction of the motor.

At operation 1504, a predicted path is determined from secondary data comprising one or more past locations and the current location during which the motor was active. A device such as a sensor, a switch, etc. may be used to detect when the motor is active, or data may be analyzed to determined when the motor was active. This predicted path may be similar to the path 706 shown in FIG. 7. The predicted path may be a continuous function or line of best fit that takes into account the one or more past locations and the current or most recent location.

At operation 1506, a second direction of the motor is determined at the current time. This second direction may align with a line that is tangential to the predicted path at the current time. Where the predicted path is entirely linear, the second direction may be colinear to the predicted path. By completing the operations 1504 and 1506, the expected alignment characteristic of the trolling motor or the primary motor may be determined through the use of secondary data.

At operation 1508, a deviation is determined based on the angular offset between the first direction and the second direction.

At operation 1512, in response to determining the deviation, the at least one controller may determine if the deviation is greater than a threshold value. In some embodiments, this threshold may be very low, and the threshold may even be zero in some embodiments. If the deviation or signal is not greater than the threshold, then the method 1500 may end or may return to operation 1502 and automatically proceed through subsequent operations so that the method 1500 is repetitively performed. In some embodiments, the method 1500 may wait for user input before proceeding with operation 1502, the method 1500 may wait for a specified time, etc. In some embodiments, the method 1500 may be restarted only upon a detection of an event such as a sudden shift in the watercraft or a particular marine device, or the method 1500 may be restarted upon detection of anomalies in other data.

If the deviation is greater than a threshold value, then the method 1500 may proceed to operation 1514. At operation 1514, the method 1500 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. The notification may comprise a recommended course of action for an operator. However, other actions may be taken as well.

The method 1500 described in reference to FIG. 15 may be adapted to address other performance characteristics-for example, other embodiments may address inaccuracy in the identified power level of a trolling motor or primary motor or the predicted velocity of the watercraft when the trolling motor and/or primary motor are operated at a power level. For example, a first velocity of the watercraft may be determined based on the power level of the primary motor or the trolling motor. A second velocity may be determined through secondary data, and this may take into account the data from a position sensor, the angle of the primary motor or the trolling motor relative to the boat, the environmental conditions, the time of year, and a wide variety of other data. Similar to other embodiments, a deviation may be determined, and one or more controllers may present a notification to a user if the deviation is sufficiently high, or the one or more controllers may cause a corrective action to the velocity data and/or cause a correction in the power level at the primary motor and/or the trolling motor. This may beneficially identify issues with declining performance of the primary motor and/or trolling motor.

FIG. 16 is a flowchart of an example method 1600 for identifying and addressing a misalignment in a sonar transducer, in accordance with some embodiments discussed herein. At operation 1602, sonar data is received related to a first area, and this sonar data may have been created by a sonar transducer or a sonar transducer assembly. The first area may be similar to the first area 504 that is scanned by the sonar transducer 520 as discussed in relation to FIGS. 5A-5D.

At operation 1604, the sonar data is analyzed to identify an object in the first area. As shown in FIG. 5B, an object 505 may be identified within first area 504. In some embodiments, the object will be distinguished from other objects in the first area, and this may be done by finding distinctions in the shape of the object, the depth of the object, etc.

At operation 1606, a first position of the object is determined. As shown in FIG. 5B, the first position 506 of the object 505 is identified. This first position may be determined solely from the sonar transducer in some embodiments, but the first position may also be determined by other marine devices as well.

At operation 1608, a second position of the object is determined using secondary data. As shown in FIG. 5C, the second position 508 of the object 505 is different from the first position 506 shown in FIG. 5B.

At operation 1610, a deviation is determined based on the difference between the first position and the second position. As shown in FIG. 5D, a vector 510 is shown indicating the deviation or difference between the first position 506 and second position 508 of the object 505.

At operation 1614, in response to determining the deviation, the at least one controller may determine if the deviation is greater than a threshold value. In some embodiments, this threshold may be very low, and the threshold may even be zero in some embodiments. If the deviation or signal is not greater than the threshold, then the method may end or may return to operation 1602 and automatically proceed through subsequent operations so that the method 1600 is repetitively performed. In some embodiments, the method may wait for user input before proceeding with operation 1602, the method may wait for a specified time, etc. In some embodiments, the method may be restarted only upon a detection of an event such as a sudden shift in the watercraft or a particular marine device, or the method may be restarted upon detection of anomalies in other data.

If the deviation is greater than a threshold value, then the method 1600 may proceed to operation 1616. At operation 1616, the method 1600 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. The notification may comprise a recommended course of action for an operator. However, other actions may be taken as well. The method 1600 described in reference to FIG. 16 may be adapted to address other performance characteristics-for example, other embodiments may correct the angular misalignment of the sonar transducer.

Method 1600 may assist in maintaining a correct alignment for a sonar transducer assembly. Where an angler is relying upon sonar returns to catch fish, minor inaccuracies in the positioning provided in sonar returns can result in a significant reduction in the probability that an angler will be able to catch one or more fish identified in sonar returns. By providing for a correction of the alignment and/or alerting the operator of alignment issues for a sonar transducer assembly, the operator/angler may be more successful in catching fish.

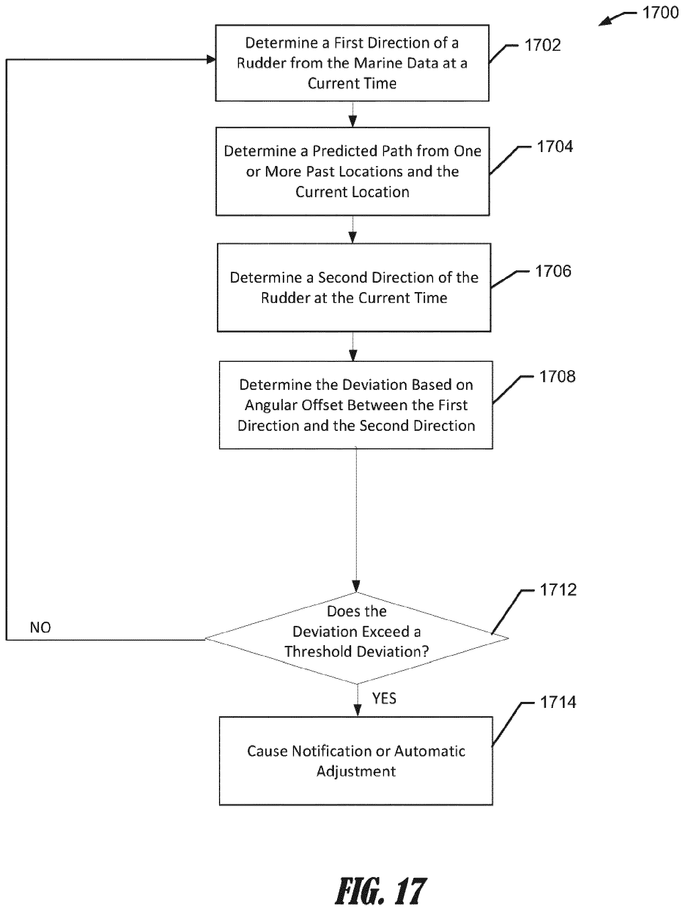

FIG. 17 is a flowchart of an example method 1700 for identifying and addressing a misalignment in a rudder, in accordance with some embodiments discussed herein. At operation 1702, a first direction of a rudder is determined from marine data at the current time. A rudder may operate similar to the primary motor 702 shown in FIG. 7 with respect to alignment. Thus, the first direction may be similar to the first direction 704 shown in in FIG. 7. The first direction of the rudder may be determined in a variety of ways, including, but not limited to, by having a sensor associated with the rudder to determine the direction of the rudder.

At operation 1704, a predicted path is determined from secondary data comprising one or more past locations and the current or most recent location. The predicted path may be similar to the predicted path 706 shown in FIG. 7. The predicted path may be a continuous function or line of best fit that takes into account the one or more past locations and the current or most recent location.

At operation 1706, a second direction of the rudder is determined at the current time. This second direction may align with a line that is tangential to the predicted path at the current time. Where the predicted path is entirely linear, the second direction may be colinear to the predicted path. This second direction may be similar to the second direction 708 shown in FIG. 7. By completing the operations 1704 and 1706, the expected alignment characteristic of the rudder may be determined through the use of secondary data.

At operation 1708, the deviation is determined based on an angular offset between the first direction and the second direction. This angular offset may be similar to the angular offset θ₃ shown in FIG. 7 between the first direction 704 and second direction 708.

At operation 1712, in response to determining the deviation, the at least one controller may determine if the deviation is greater than a threshold value. In some embodiments, this threshold may be very low, and the threshold may even be zero in some embodiments. If the deviation is not greater than the threshold, then the method may end or may return to operation 1712 and automatically proceed through subsequent operations so that the method 1700 is repetitively performed. In some embodiments, the method may wait for user input before proceeding with operation 1702, the method may wait for a specified time, etc. In some embodiments, the method may be restarted only upon a detection of an event such as a sudden shift in the watercraft or a particular marine device, or the method may be restarted upon detection of anomalies in other data.

If the deviation is greater than a threshold value, then the method 1700 may proceed to operation 1712. At operation 1714, the method 1700 may cause at least one of (1) a notification indicating a misalignment of the one or more marine devices to be provided to a user, (2) a data adjustment to the marine data so as to produce recalibrated marine data, or (3) a physical adjustment to be applied to the one or more marine devices so as to subsequently receive realigned marine data from the one or more marine devices. The notification may comprise a recommended course of action for an operator. However, other actions may be taken as well. The method 1700 described in reference to FIG. 17 may be adapted to address other performance characteristics.

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A system for providing alignment functionality for one or more marine devices on a watercraft, the system comprising:
one or more marine devices associated with the watercraft, wherein the one or more marine devices comprise at least one of a radar, a sonar transducer, a primary motor, a trolling motor, an autopilot, a rudder, a position sensor, or a direction sensor; and
at least one controller configured to:
receive marine data from the one or more marine devices;
receive secondary data associated with one or more second devices, wherein the one or more second devices is different from the one or more marine devices that provided the marine data;
determine an expected alignment characteristic for the one or more marine devices based on the secondary data;
determine a deviation from the expected alignment characteristic based on the marine data, wherein the deviation is greater than a threshold deviation; and
cause, in response to determining the deviation, at least one of:
a notification indicating a misalignment of the one or more marine devices to be provided to a user,
a data adjustment to the marine data so as to produce recalibrated marine data, or
a physical adjustment to be applied to the one or more marine devices so as to subsequently receive realigned marine data from the one or more marine devices.

2. The system of claim 1, wherein the at least one controller is configured to utilize a model to determine the expected alignment characteristic for the one or more marine devices, wherein the model is formed based on historical comparisons of the secondary data and the marine data.

3. The system of claim 2, wherein the model is refined through machine learning utilizing artificial intelligence based on the historical comparisons of the secondary data and the marine data and known deviations of the marine data for the historical comparisons.

4. The system of claim 3, wherein the model is subsequently refined utilizing the marine data, the secondary data, and the determined deviation.

5. The system of any one of claims 2 to 4, wherein the one or more marine devices comprises at least one of the radar or the direction sensor, wherein the direction sensor comprises a compass or a heading sensor, wherein the at least one controller is further configured to:
determine a first angular position of a point of interest from the marine data, wherein the point of interest is a fixed landmark;
determine the expected alignment characteristic by determining a second angular position of the point of interest using the secondary data; and
determine the deviation based on an angular offset between the first angular position of the point of interest and a second angular position of the point of interest.

6. The system of any one of claims 2 to 4, wherein the one or more marine devices comprises the position sensor, wherein the at least one controller is further configured to:
determine a first position of a point of interest from the marine data, wherein the point of interest is a fixed landmark;
determine the expected alignment characteristic by determining an expected position of the point of interest using the secondary data; and
determine the deviation based on a difference between the first position of the point of interest and the expected position of the point of interest.

7. The system of any one of claims 2 to 4, wherein the one or more marine devices comprises the autopilot, wherein the at least one controller is further configured to:
determine a first position of the watercraft;
determine the expected alignment characteristic by determining a second position of the watercraft using the secondary data;
determine the deviation based on a difference between the first position and the second position.

8. The system of any one of claims 2 to 4, wherein the one or more marine devices comprises the trolling motor or the primary motor, wherein the at least one controller is further configured to:
determine a first direction of the trolling motor or the primary motor from the marine data at a current time;
determine the expected alignment characteristic of the trolling motor or the primary motor using the secondary data, wherein the secondary data comprises one or more past locations of the watercraft and a current location of the watercraft, wherein the at least one controller determines a predicted path from the one or more past locations and the current location during which the trolling motor or the primary motor was active, and wherein the at least one controller determines the expected alignment characteristics by determining a second direction that is expected for the trolling motor or the primary motor at the current time, where the second direction aligns with a line colinear or tangential to the predicted path at the current time; and
determine the deviation based on an angular offset between the first direction and the second direction.

9. The system of any one of claims 2 to 4, wherein the one or more marine devices comprises the sonar transducer, wherein the at least one controller is further configured to:
receive sonar data that was created by the sonar transducer, wherein the sonar data is related to a first area;
analyze the sonar data to identify an object in the first area;
determine a first position of the object;
determine the expected alignment characteristics by determining a second position of the object using secondary data, wherein the secondary data comprises historical sonar data; and
determine the deviation based on a difference between the first position of the object and the second position of the object.

10. The system of any one of claims 2 to 4, wherein the one or more marine devices comprises the rudder, wherein the at least one controller is further configured to:
determine a first direction of the rudder from the marine data at a current time;
determine the expected alignment characteristic of the rudder using the secondary data, wherein the secondary data comprises one or more past locations of the watercraft and a current location of the watercraft, wherein the at least one controller determines a predicted path from the one or more past locations and the current location, and wherein the at least one controller determines the expected alignment characteristics by determining a second direction that is expected for the rudder at the current time, where the second direction aligns with a line colinear or tangential to the predicted path at the current time; and
determine the deviation based on an angular offset between the first direction and the second direction.

11. The system of any one of the preceding claims, wherein the one or more second devices comprise at least one of a radar, a sonar transducer, a global positioning system, a compass, a heading sensor, a trolling motor, an autopilot, position sensor, a direction sensor, a GPS sensor, an AIS transceiver, a temperature sensor, a camera, or a memory comprising previous navigational data.

12. The system of claim 1, wherein the at least one controller is configured to repetitively determine any deviation from the expected alignment characteristic based on the marine data.

13. A non-transitory computer readable medium having stored thereon software instructions that, when executed by at least one controller, cause the at least one controller to execute the steps comprising:
receive marine data from one or more marine devices associated with a watercraft;
receive secondary data from one or more second devices, wherein the one or more second devices is different from the one or more marine devices that provided the marine data;
determine an expected alignment characteristic for the one or more marine devices based on the secondary data;
determine a deviation from the expected alignment characteristic based on the marine data, wherein the deviation is greater than a threshold deviation; and
cause, in response to determining the deviation, at least one of:
a notification indicating a misalignment of the one or more marine devices to be provided to a user,
a data adjustment to the marine data so as to produce recalibrated marine data, or
a physical adjustment to be applied to the one or more marine devices so as to subsequently receive realigned marine data from the one or more marine devices.

14. The non-transitory computer readable medium of claim 13, wherein the non-transitory computer readable medium causes the at least one controller to:
utilize a model to determine the expected alignment characteristic for the one or more marine devices, wherein the model is formed based on historical comparisons of the secondary data and the marine data.
